# EUROPEAN PATENT SPECIFICATION

(11) **EP 3 500 436 B1**
(45) Date of publication and mention of the grant of the patent: **24.03.2021**
(21) Application number: 17752465.9
(22) Date of filing: 10.08.2017
(51) Int. Cl.: B42D 25/30, B41M 3/14, B42D 25/351, B41M 3/06

(54) **IMAGE ARRAYS FOR OPTICAL DEVICES AND METHODS OF MANUFACTURE THEREOF**
BILDARRAYS FÜR OPTISCHE VORRICHTUNGEN UND VERFAHREN ZUR HERSTELLUNG DAVON
RÉSEAUX D'IMAGES POUR DISPOSITIFS OPTIQUES ET LEURS PROCÉDÉS DE FABRICATION

(30) Priority: 22.08.2016 GB 201614319
(43) Date of publication of application: 26.06.2019
(73) Proprietor: De La Rue International Limited, Basingstoke, Hampshire RG22 4BS (GB)
(72) Inventor: LISTER, Adam, Andover Hampshire SP10 2ND (GB)
(74) Representative: Gill Jennings & Every LLP
(86) International application number: PCT/GB2017/052362
(87) International publication number: WO 2018/037208

(56) References cited:
- WO-A1-2012/027779
- WO-A2-2015/166217

## Description

This invention relates to image arrays for use in optical devices, as well as to optical devices themselves. Optical devices have a wide range of applications, including decorative uses. A particularly preferred form of optical device to which the invention can be applied is a security device. Security devices are used for example on documents of value such as banknotes, cheques, passports, identity cards, certificates of authenticity, fiscal stamps and other secure documents, in order to confirm their authenticity. Methods of manufacturing image arrays and optical devices are also disclosed.

Optical devices of the sorts disclosed herein find application in many industries. For example, decorative optical devices having a purely aesthetic function may be applied to packaging to enhance its appearance, or similarly to articles such as mobile phone covers, greetings cards, badges, stickers and the like.

Devices in accordance with the invention find particular utility however in the field of security devices and so the disclosure will focus on this aspect hereinafter.

Articles of value, and particularly documents of value such as banknotes, cheques, passports, identification documents, certificates and licences, are frequently the target of counterfeiters and persons wishing to make fraudulent copies thereof and/or changes to any data contained therein. Typically such objects are provided with a number of visible security devices for checking the authenticity of the object. By "security device" we mean a feature which it is not possible to reproduce accurately by taking a visible light copy, e.g. through the use of standardly available photocopying or scanning equipment. Examples include features based on one or more patterns such as microtext, fine line patterns, latent images, venetian blind devices, lenticular devices, moire interference devices and moire magnification devices, each of which generates a secure visual effect. Other known security devices include holograms, watermarks, embossings, perforations and the use of colour-shifting or luminescent / fluorescent inks. Common to all such devices is that the visual effect exhibited by the device is extremely difficult, or impossible, to copy using available reproduction techniques such as photocopying. Security devices exhibiting non-visible effects such as magnetic materials may also be employed.

One class of optical devices are those which produce an optically variable effect, meaning that the appearance of the device is different at different angles of view. Such devices are particularly effective since direct copies (e.g. photocopies) will not produce the optically variable effect and hence can be readily distinguished from genuine devices. Optically variable effects can be generated based on various different mechanisms, including holograms and other diffractive devices, moire interference and other mechanisms relying on parallax such as venetian blind devices, and also devices which make use of focusing elements such as lenses, including moire magnifier devices, integral imaging devices and so-called lenticular devices.

Moire magnifiers and integral imaging devices essentially utilise an array of focussing elements to synthetically magnify a corresponding array of microimages. Lenticular devices on the other hand do not rely upon magnification, synthetic or otherwise. An array of focusing elements, such as cylindrical lenses, overlies a corresponding array of image sections, or "slices", each of which depicts only a portion of an image which is to be displayed. Image slices from two or more different images are interleaved and, when viewed through the focusing elements, at each viewing angle, only selected image slices will be directed towards the viewer. In this way, different composite images can be viewed at different angles. However it should be appreciated that no magnification typically takes place and the resulting image which is observed will be of substantially the same size as that to which the underlying image slices are formed. Some examples of lenticular devices are described in US-A-4892336, WO-A-2011/051669, WO-A-2011051670, WO-A-2012/027779 and US-B-6856462. More recently, two-dimensional lenticular devices have also been developed and examples of these are disclosed in British patent application numbers 1313362.4 and 1313363.2. Lenticular devices have the advantage that different images can be displayed at different viewing angles, giving rise to the possibility of animation and other striking visual effects which are not possible using the moire magnifier or integral imaging techniques.

Lenticular devices depend for their success significantly on the resolution with which the image array (defining the interleaved image sections) can be formed. Since the security device must be thin in order to be incorporated into a document such as a banknote, the focusing elements must also be thin, which by their nature also limits their lateral dimensions. For example, lenses used in such security elements preferably have a width or diameter of 50 microns or less, e.g. 30 microns. In a lenticular device this leads to the requirement that each image element must have a width which is at most half the lens width. For example, in a "two channel" lenticular switch device which displays only two images (one across a first range of viewing angles and the other across the remaining viewing angles), where the lenses are of 30 micron width, each image slice must have a width of 15 microns or less. More complicated lenticular effects such as animation, motion or 3D effects usually require more than two interlaced images and hence each slice needs to be even finer in order to fit all of the image slice into the optical footprint of each lens. For instance, in a "six channel" device with six interlaced images, where the lenses are of 30 micron width, each image slice must have a width of 5 microns or less.

Typical processes used to manufacture image patterns for security devices are based on printing and include intaglio, gravure, wet lithographic printing as well as dry lithographic printing. The achievable resolution is limited by several factors, including the viscosity, wettability and chemistry of the ink, as well as the surface energy, unevenness and wicking ability of the substrate, all of which lead to ink spreading. With careful design and implementation, such techniques can be used to print pattern elements with a line width of between 25 µm and 50 µm. For example, with gravure or wet lithographic printing it is possible to achieve line widths down to about 15 µm.

Methods such as these are limited to the formation of single-colour image elements, since it is not possible to achieve the high registration required between different workings of a multi-coloured print. In the case of a lenticular device for example, the various interlaced image sections must all be defined on a single print master (e.g. a gravure or lithographic cylinder) and transferred to the substrate in a single working, hence in a single colour. The various images displayed by the resulting security device will therefore be monotone, or at most duotone if the so-formed image elements are placed against a background of a different colour.

One approach which has been put forward as an alternative to the printing techniques mentioned above is used in the so-called Unison Motion™ product by Nanoventions Holdings LLC, as mentioned for example in WO-A-2005052650. This involves creating pattern elements ("icon elements") as recesses in a substrate surface before spreading ink over the surface and then scraping off excess ink with a doctor blade. The resulting inked recesses can be produced with line widths of the order of 2 µm to 3 µm. This high resolution produces a very good visual effect, but the process is complex and expensive. Further, limits are placed on the minimum substrate thickness by the requirement to carry recesses in its surface. Again, this technique is only suitable for producing image elements of a single colour.

Other approaches involve the patterning of a metal layer through the use of a photosensitive resist material and exposing the resist to appropriate radiation through a mask. Depending on the nature of the resist material, exposure to the radiation either increases or decreases its solubility in certain etchants, such that the pattern on the mask is transferred to the metal layer when the resist-covered metal substrate is subsequently exposed to the etchant. For instance, EP-A-0987599 discloses a negative resist system in which the exposed photoresist becomes insoluble in the etchant upon exposure to ultraviolet light. The portions of the metal layer underlying the exposed parts of the resist are thus protected from the etchant and the final pattern formed in the metal layer is the "negative" of that carried on the mask. In contrast, our International patent application no. PCT/GB2016/051709 discloses a positive resist system in which the exposed photoresist becomes more soluble in the etchant upon exposure to ultraviolet light. The portions of the metal layer underlying the unexposed parts of the resist are thus protected from the etchant and the final pattern formed in the metal layer is the same as that carried on the mask. Methods such as these offer good pattern resolution. This method also offers the possibility of forming one of the images as a multi-coloured image. However, due to the nature of the manufacturing process, only two-channel lenticular devices can be constructed with a multi-coloured image, and then only one of the channels can carry a multicolour image.

Similarly, our International patent application no. PCT/GB2016/051708 discloses a technique whereby a release substance is used to remove portions of an image layer to leave image slices which can be multi-coloured. A second multi-coloured image can be overlaid to provide the intervening image elements. Hence, both of the images displayed by the device can be multi-coloured images but again in this case the device can contain a maximum of two channels.

Patent document WO 2012/027779 A1 discloses an optical device having two groups of line type image elements, each located at a distance from a focusing element. Image elements are in interleaved relationship in the object plane to form first and second channels of a flipping image.

It would be desirable to provide a security device which can display multi-coloured images without limitation as to the number of channels.

In accordance with the present invention, a method of manufacturing an image array for an optical device, comprises:
(a) generating a plurality of different mask images by, for each of at least two different images, the at least two images collectively including parts in at least two different colours:
   (a1) providing a pixelated version of the image comprising a plurality of image pixels, each image pixel exhibiting a uniform colour;
   (a2) for each image pixel of the pixelated image, creating a corresponding mask pixel based on the colour of the respective image pixel, each mask pixel comprising an arrangement of one or more mask regions and/or one or more void regions, different arrangements of the one or more mask regions and/or one or more void regions in different ones of the mask pixels defining different respective colours;
   (a3) arranging the mask pixels in accordance with the positions of their corresponding image pixels in the pixelated image to form a mask image;
(b) interlacing the plurality of different mask images, by dividing each mask image into elongate image slices extending along a first direction, selecting a subset of image slices from each mask image, and arranging the selected image slices from all of the mask images to form an interlaced mask image in which the image slices from each respective mask image alternate with one another periodically along a second direction which is substantially orthogonal to the first direction;
then, in any order or simultaneously:
(c) forming a mask layer comprising a masking material which is patterned in accordance with the interlaced mask image; and
(d) forming a colour layer comprising elongate strips of at least two different colours which alternate with one another periodically in the first direction, the elongate strips extending along the second direction;
wherein the mask layer and the colour layer are arranged to overlap one another, whereby the void regions of the mask pixels in the mask layer reveal portions of the colour layer such that, in combination, the mask layer and the colour layer form a multi-coloured image array exhibiting versions of the at least two images interlaced with one another.

As mentioned already, the optical device is preferably a security device but could alternatively be configured for use in other fields.

In the above method, colour is provided to each of the images incorporated into the device by the colour layer, which can be formed in a conventional manner without the need for high resolution. However, which colour is displayed to the viewer by each point of each image is determined by the mask layer, the mask regions of which are of relatively high optical density (preferably opaque) compared to the void regions where the masking material is preferably absent. The mask layer therefore acts to obscure or block selected portions (and hence colours) of the colour layer - corresponding to the mask regions in each pixel - with the result that only those colours visible in the void areas of each pixel will contribute to its apparent colour. In the finished image array, the mask layer therefore defines both the colour of each point of every image as well as the arrangement of image slices - i.e. which of the plurality of images is present at each location across the image array. Hence the mask layer does need to be formed using a sufficiently high-resolution technique. However, the mask layer need only be monochromatic - and therefore formed of a single type of masking material across the whole image array - which means that it can be formed using any suitable high-resolution pattern manufacturing technique, including any of those mentioned above. Nonetheless, every one of the images incorporated into the image array can now be multi-coloured (if desired) and there is no limitation on the number of channels or the number of multi-coloured images (beyond that imposed by the resolution limits of the technique selected for forming the mask layer, which will set a minimum width for the image slices).

It should be noted that the method does not require any of the images themselves to be multi-coloured and this is because the technique works equally well where one or more - or each - of the images is individually monochromatic, although as indicated above the collection of input images as a whole should include parts of at least two colours in order to arrive at a finished image array which is multi-coloured. If all of the input images were monochromatic and of the same colour then the necessary image array could be formed using the conventional techniques mentioned above. Thus in an exemplary two-channel image array formed using the present method, the first image could be monochromatic red for instance and the second image monochromatic blue for example. A monochromatic input image will result in a monochromatic output image (for that channel), whereas a multi-coloured input image will result in a multi-coloured output image (for that channel). Hence in particularly preferred embodiments, at least one of the images is a multi-coloured image, preferably at least two of the images are multi-coloured images and most preferably all of the images are multi-coloured images. A multi-coloured image is one which contains at least two colours, preferably more.

By arranging the elongate image slices of the mask layer to extend along a first direction whilst the elongate colour strips of the colour layer extend along the orthogonal second direction (both the slices and the strips preferably being substantially rectilinear), all of the colour strips run across all of the image slices. This ensures that all of the at least two colours of the colour layer are available for display in each image slice and hence each of the images can be displayed as a multi-coloured image if desired. If the colour strips had some other arrangement it would be necessary to form them at high resolution to ensure that each colour was available to each image slice to enable this. This would require the colour layer to be formed at a similar level of resolution as the mask layer which is extremely difficult in multiple colours for the reasons discussed above. However by arranging the colour layer as specified above, there is no such restriction. The colour strips only need be arranged at a sufficiently small pitch that the individual colours are combined by the naked human eye (i.e. without magnification), which will typically be the case for strip widths of around 200 microns or less, more preferably 100 microns or less. Hence any standard printing process (or other image formation method) can be used to form the colour layer, including digital methods such as inkjet or laser printing, as well as techniques such as gravure printing, lithographic printing, flexographic printing, intaglio printing, offset printing, screen printing and the like.

The arrangement of the mask and/or void region(s) in each mask pixel depends on the colour of the image pixel to which it corresponds in the original image. Thus, if there are two or more mask pixels deriving from image pixels which were of the same colour in the original image, those mask pixels will be allocated the same arrangement of mask and/or void region(s), or at least arrangements with the same proportion of each colour blocked so that the end appearance is the same. On the other hand, mask pixels deriving from image pixels which were of different colours in the original image will have different arrangements of mask and/or void region(s). It should be appreciated that some mask pixels could comprise solely a (single) mask region which extends across the whole area of the pixel, for instance if the colour of that pixel is to be black. Similarly, some mask pixels could comprise solely a (single) void region extending across the whole pixel area, for instance if all of the colours of the colour layer are required, in the same relative proportion as arranged on the colour layer, to produce the desired colour (e.g. white, if the colours of the colour layer are red, green and blue). However, typically at least some (and usually most, where the image is multi-coloured) of the mask pixels will each contain at least one mask region and at least one void region such that some of the colour layer is blocked from view in that pixel.

It should also be noted that while the versions of the at least two images that are exhibited by the finished image array will each be multi-coloured to the same extent that the original images were multi-coloured, the colours themselves may or may not the same as those in the original images. That is, the versions of the images ultimately displayed may be "false colour" versions of the original images, e.g. swapping each colour in the original image with another. This is because it is not essential to register the mask layer with the colour layer longitudinally along the first direction, and hence if there is lateral displacement different portions of the colour stripes will be revealed through the mask, and the particular colours seen will depend on the degree of mis-register. Only if lateral registration is applied will each mask pixel line up as intended with the colour strips and therefore generate the original colours (or a near approximation thereof). Whilst this will be the preference in many cases, in other embodiments a false colour image may be acceptable (e.g. if the image does not depict something with an expected colour - for instance text against a plain background will appear appropriate in any colour whereas an image of a tree will be expected to be green and brown), and may indeed be preferred.

Typically, method steps (a) and (b) will be performed using one or more appropriately programmed processors whilst steps (c) and (d) will involve the use of appropriate output means for physically forming the mask layer and colour layer, such as printing facilities or the like.

The method could start with the provision of an image already formed as an array of pixels of the desired size. However, in other cases the method may include an additional preliminary step of creating the pixelated image from some original input image. This could for example be a bitmap, jpeg or any other image format and may already be formed of pixel-type elements although these may not be of the desired resolution. For instance, the original image may have pixels at a higher resolution (i.e. smaller size) than it is desired to replicate in the image array. Hence in preferred examples, step (a1) comprises providing the image and converting it to the pixelated image by dividing the image into a grid of pixels of predetermined size and allocating each pixel a single colour based on the original colour(s) of the respective portion of the image. Thus if for example the original source image is formed of pixels at a resolution four times that desired in the image array, the conversion may involve averaging the colour of each set of four adjacent pixels to produce one new pixel at the desired size. Preferably, all of the pixels of any one pixelated image are of the same size and shape, which will typically be square or rectangular. The pixels should preferably be sufficiently small that the naked human eye sees a substantially continuous image and not the individual pixels. In preferred embodiments the pixels have a size of between 50 and 500 microns, preferably between 100 and 300 microns.

The mask pixels can be created in a number of different ways. In a first preferred implementation, in step (a2) each mask pixel is created by identifying the colour of the respective image pixel and using a look-up table stored in memory to select an arrangement of one or more mask regions and/or one or more void regions corresponding to the identified colour. Hence, prior to performing the method, the look up table must be populated with a set of possible colours for the image pixels and a corresponding arrangement of mask and/or void regions for each one. In this case there will be a finite number of possible colours stored and so in practice it will be necessary to approximate the identified colour to the closet available colour in the look up table. This could be done for example by associating each colour in the look up table with a range of colour values (preferably centred on the stored colour itself) and then selecting which of the stored colours (and hence mask arrangements) should be used for any one image pixel by selected the stored colour having a colour range into which the identified colour of the image pixel falls.

In an alternative preferred implementation, in step (a2) each mask pixel is created by identifying the colour of the respective image pixel, identifying what relative proportions of the at least two colours of the colour layer are required to form the identified colour, and using an algorithm to generate an arrangement of one or more mask regions and/or one or more void regions which will reveal the identified relative proportions of the at least two colours of the colour layer. This approach has the advantage that there is no limit placed on the number of different colours which can be represented in the mask image. However, it is also more computationally expensive.

The arrangement of mask and/or void regions in each mask pixel could take any desirable form, including a half tone pattern or the like. However, in particularly preferred implementations, in step (a2), the mask region(s) and/or void region(s) forming each mask pixel each extend in the second direction from one side of the mask pixel to the other, the width and position of the void region(s) in the first direction determining the colour that will be exhibited by the mask pixel combined with the colour layer.

As in conventional lenticular devices, it will be necessary to fit at least one image slice from each of the images which are to be displayed by the device within the optical footprint of each focussing element, which are necessarily small in order to achieve a thin device structure as explained above. Therefore, in step (b) the elongate image slices into which each mask image is divided advantageously have a width of between 1 and 50 microns, preferably between 1 and 30 microns, more preferably between 1 and 20 microns, most preferably between 1 and 10 microns.

The interlacing performed on the two or more mask images in step (b) can be implemented using any conventional image interlacing process, such as any of those discussed in the disclosures mentioned above. The non-selected image slices from each mask image which are not used in to form the interlaced mask image will be discarded. In preferred embodiments, selecting a subset of image slices from each mask image comprises selecting every n^{th} image slice from each mask image, where n is an integer greater than 1. Typically the value of n will correspond to the number of channels (and hence images) to be displaced in the finished lenticular device. For instance, in a 2-channel device, every second image slice from each mask image will typically be selected, whereas in a 3-channel device it will be every third image slice, and so on.

As already mentioned, it is strongly preferred that the mask layer formed in step (c) is monochromatic. Hence the mask layer can be formed of a single masking material and thus constructed in a single step (e.g. as a single printed working) without the need for accurate high resolution register with a second masking material. Preferably, in step (c) the masking material comprises an ink or polymer containing a visible substance, preferably a curable ink or polymer (for example vinyl copolymer resin based on vinyl acetate and vinyl chloride with a 10 to 25% loading of carbon black), or a metal or a metal alloy (such as aluminium, copper or an alloy of the two).

In all implementations, the mask regions will be of greater optical density than the void regions, preferably due to the masking material being present in the mask regions and substantially absent in the void regions. Desirably, the masking material may have an optical density greater than 1 and preferably is substantially visually opaque. This helps to ensure that the portions of the colour layer which overlap with the mask regions are not seen when the two layers are viewed in combination. It should be noted that the mask layer and colour layer combination could be viewed from either side in the finished device and may be designed for viewing in reflected light and/or in transmitted light. That is, whilst in some embodiments the mask layer may ultimately be located between the viewer and the colour layer in the finished device, thereby blocking the underlying colour layer from view in the mask regions, in other cases the order of the layers may be reversed. Now at least when the array is viewed in transmitted light, the mask regions will still obstruct the passage of light therethrough, rendering the corresponding parts of the colour layer not visible. It is preferred that the void regions of the mask layer are substantially visually transparent and colourless, so as not to modify the colour(s) of the colour layer exhibited therethrough. However this is not essential and the void regions could for instance be translucent (i.e. optically scattering) and/or could carry a visibly coloured tint. For instance this may be the case if the mask layer is formed by applying the masking material to a non-transparent (but translucent and/or tinted) substrate.

The masking layer can be formed using various different techniques provided the necessary high resolution can be achieved. In one preferred embodiment, in step (c), the mask layer is formed by printing the masking material onto a surface in accordance with the interlaced mask image, preferably by gravure printing, lithographic printing, flexographic printing, micro-intaglio printing or dye diffusion thermal transfer (D2T2). Any of the high-resolution printing methods described in the existing disclosures mentioned above could be used for instance.

In alternative preferred embodiments, in step (c), the mask layer is formed by depositing the masking material onto a surface and then selectively removing regions of the masking material in accordance with the interlaced mask image, the masking material preferably being a metal or metal alloy. This could be achieved for instance by demetallising or using a release substance as detailed in our previous disclosures as mentioned above. In a particularly preferred implementation, selectively removing regions of the masking material comprises applying a photosensitive resist material to the masking material, exposing the photosensitive resist material to radiation to which the resist material is responsive through a patterned mask arranged in accordance with the interlaced mask image such that portions of the resist material corresponding to the void regions of the interlaced mask image are more soluble in an etchant than portions of the resist material corresponding to the mask regions of the mask image, and then applying the etchant so as to dissolve the resist material and the masking material in the portions corresponding to the void regions. The resist material could be a positive resist or a negative resist - i.e. becoming more or less soluble in the etchant upon exposure to the radiation. Preferably the radiation comprises UV radiation.

The colour layer could include any number of different coloured strips provided there are at least two different colours. However in order to achieve full colour versions of the images, it is particularly advantageous if the colour layer comprises elongate strips of at least three, preferably exactly three or exactly four, different colours which alternate with one another periodically in the first direction, the colours preferably being red, green and blue, or cyan, magenta, yellow and black. In this way, substantially any colour can be created by mixing the available colours in appropriate proportions. It should be noted that, throughout this disclosure, the term "colour" encompasses all visible hues including achromatics such as white, grey, black, silver etc as well as chromatic colours such as red, orange, yellow etc.

As mentioned above, the colour strips do not need to be formed at particularly high resolution but it is preferred that they are sufficiently narrow that the naked human eye cannot easily distinguish between them. In preferred examples, the elongate strips of the colour layer each have a width in the first direction of between 20 and 200 microns, preferably between 50 and 150 microns, more preferably between 75 and 125 microns.

It is strongly preferred that steps (c) and (d) are registered to one another at least in terms of skew in order that the first and second directions of the mask layer match those of the colour layer accurately. As mentioned above, registration between steps (c) and (d) in terms of translational position along the first direction is not essential but is preferred in order to achieve true colour versions of the original images. Registration in the second direction is not required between steps (c) and (d) due to the arrangement of the colour strips being substantially invariant in this dimension.

In many preferred implementations, the overlapped mask layer and colour layer contact one another. That is, there is no optical spacing between the two layers with the result that there is no parallax effect and the apparent colour of each pixel exhibited by the two layers in combination will not depend on viewing angle. In other preferred embodiments, however, it may be desirable to increase the complexity of the device by incorporating such a parallax effect and in such cases the overlapped mask layer and colour layer are spaced from one another by one or more transparent layers. Hence as the device is tilted, different portions of the colour layer will be revealed by the void region(s) in each mask pixel causing each of the displayed images to change colour. To see a particularly strong colour switch effect, it is desirable in such implementations that the thickness of the transparent layer(s) between the mask layer and the colour layer will be similar to the width of the colour stripes. This will produce a colour switch when the device is tilted by about 45 degrees. However since this will affect the overall thickness of the device, and it will be undesirable to reduce the colour stripe width below a level at which the colour layer can be manufactured straightforwardly, a compromise may be necessary. A colour switch effect will also be displayed if the thickness of the transparent layer(s) is greater than the colour stripe width provided that certain external factors are constant, i.e. the device is illuminated in transmission by a single point light source and there is no optical scattering within the transparent layer(s).

Preferably, at least some of the respective images each comprise one of a letter, number, symbol, character, logo, portrait or graphic. The images could have any level of complexity including photographic images.

In especially preferred embodiments, the respective images are configured to display when viewed in sequence an animation, movement, morphing, enlarging or contracting effect. Examples will be given below.

Image arrays formed using the above method may then be incorporated into a security device, which steps may be carried out in a separate process and potentially by a different entity.

However, the invention further provides a method of manufacturing an optical device, comprising:
manufacturing a multi-coloured image array using the method described above; and
overlapping the multi-coloured image array with a focussing element array comprising a plurality of elongate focusing structures, the elongate axes of which are aligned along the first direction, the elongate focusing structures being arranged parallel to one another periodically along the second direction, each elongate focusing structure having an optical footprint of which different elongate portions will be directed to the viewer in dependence on the viewing angle, the centre line of each optical footprint being parallel with the first direction;
wherein the multi-coloured image array and the focussing element array are configured such that at least one of the image slices from each of the different images is located in the optical footprint of each focussing element, whereby, depending on the viewing angle, the focusing element array directs light from selected image slices to the viewer, such that as the device is tilted about an axis parallel to the first direction, different ones of the respective images are sequentially displayed by the selected image slices in combination.

The focussing element array co-operates with the image array in the manner described above to form a lenticular device which can display any number of images, any of which may be a multi-coloured image if desired.

Throughout this specification, the term "elongate focussing structure" should be understood as encompassing both a single, elongate focussing element and (alternatively) a set of at least two focusing elements arranged to collectively form an elongate focussing structure (but which need not, individually, be elongate). Hence, in some preferred embodiments, each elongate focusing structure comprises an elongate focusing element, preferably a cylindrical focusing element. Thus the array of elongate focussing structures could be a regular array of linear focussing elements with periodicity in one dimension only (parallel to the second direction).

However in other preferred implementations, each elongate focusing structure comprises a plurality of focusing elements, preferably spherical or aspherical focusing elements, arranged such that the centre point of each focusing element is aligned along a straight line in the first direction (which in practice will correspond to the centre line of the optical footprint). In this case, for example, the focusing elements could be arranged in an orthogonal array (square or rectangular) or in a hexagonal array. Hence the array of elongate focussing structures may have a two-dimensional periodicity. Where each elongate focusing structure comprises a plurality of elements, preferably those elements substantially abut one another along the first direction or at least have no intervening focusing elements with centre points which are not on the same straight line.

Forming each elongate focussing element as a line of focusing elements such that the array has two-dimensional periodicity has a number of potential benefits. Firstly, such implementations have been found to exhibit good visual effects over a larger range of viewing angles (i.e. lower viewing angle dependence) as compared with devices using cylindrical lenses. Secondly, the use of such arrays improves the design freedom since different "first directions" can be defined relative to the same array in different regions of the device. For example, in an orthogonal grid of elements either of the two orthogonal axes could be used as the first direction so in a first part of the device the image slices could be interlaced along one orthogonal direction (locally acting as the second direction), and in a second part of the device the image slices could be interlaced in the other of the orthogonal axes (locally acting as the second direction). The orientation of the colour strips would also need to be changed in the two parts of the device. In this way the two parts of the device will exhibit different effects (one appearing active when tilting occurs in a first direction, whilst the other is static, and vice versa when tilting occurs in an orthogonal direction), achieved through design of the image array only and not requiring any distinction between the focusing elements in each part of the device. This also avoids the need for any translational registration between the image array and the focussing elements.

In all cases, the focusing elements making up the focusing structure array are preferably lenses or mirrors. The periodicity of the focusing structure array in the second direction (and optionally in the first direction) and therefore maximum width of the individual focusing elements in the second direction is related to the device thickness and is preferably in the range 5-200 microns, still preferably 10 to 70 microns, most preferably 20-40 microns. The focusing elements can be formed in various ways, but are preferably made via a process of thermal embossing or cast-cure replication. Alternatively, printed focusing elements could be employed as described in US-B-6856462. If the focusing elements are mirrors, a reflective layer may also be applied to the focussing surface.

Preferably, the multi-coloured image array is located approximately in the focal plane of the focussing element array. If there is a significant optical spacing between the mask layer and the colour layer, it is the mask layer that should preferably lie in the focal plane.

Desirably, the focussing element array is registered to the mask layer of the multi-coloured image array at least in terms of skew and preferably also translational position along the second direction. The latter is desirable in order to control which of the images is visible at which viewing angles.

Also provided by the present invention is a security device, comprising:
a focussing element array comprising a plurality of elongate focusing structures, the elongate axes of which are aligned along a first direction, the elongate focusing structures being arranged parallel to one another periodically along a second direction which is substantially orthogonal to the first direction, each elongate focusing structure having an optical footprint of which different elongate portions will be directed to the viewer in dependence on the viewing angle, the centre line of each optical footprint being parallel with the first direction; and
a multi-coloured image array overlapping the focussing element array, the multi-coloured image array comprising:
   a mask layer comprising a masking material which is patterned in accordance with an interlaced mask image, the interlaced mask image comprising elongate image slices from at least two different images, where the at least two different images collectively include parts in at least two different colours, the elongate image slices extending along the first direction and being interlaced with one another such that the elongate image slices from each respective image alternate with one another periodically along the second direction, each pixel of each image being represented by a corresponding mask pixel comprising an arrangement of one or more mask regions and/or one or more void regions, different arrangements of the one or more mask regions and/or one or more void regions in different ones of the mask pixels defining different respective colours; and
   a colour layer comprising elongate strips of at least two different colours which alternate with one another periodically in the first direction, the elongate strips extending along the second direction;
   wherein the mask layer and the colour layer are arranged to overlap one another, whereby the void regions of the mask pixels in the mask layer reveal portions of the colour layer such that the multi-coloured image array formed by the mask layer and colour layer in combination exhibits versions of the at least two images interlaced with one another;
wherein the multi-coloured image array and the focussing element array are configured such that at least one of the image slices from each of the different images is located in the optical footprint of each focussing element, such that, depending on the viewing angle, the focusing element array directs light from selected image slices to the viewer, such that as the device is tilted about an axis parallel to the first direction, different ones of the respective images are sequentially displayed by the selected image slices in combination.

The security device provides all the advantages already discussed above in relation to the presently disclosed methods of manufacture. All the terminology already explained above shares the same meanings here.

The security device can be provided with any of the preferred features discussed above in the context of the methods of manufacture.

It should be noted whilst the security device will preferably be made using the above-described method of manufacture, other possibilities exist. For example, the plurality of images could be interleaved with one another and then the interleaved mask layer created directly by analysing the colour of each pixel of the interleaved image and creating a corresponding mask pixel using substantially the same process as described above. However this approach is less preferred since the pixel size at which the analysis will need to be carried out will be reduced in order to account for the high resolution pattern carried in the interleaved image and hence the computational demands will be higher.

The optical device may optionally include one or more substances with additional functionalities. For example in preferred embodiments the device may further comprise a magnetic layer, such that the device can be detected using a magnetic reader. The optical device may alternatively or additionally comprise one or more optically detectable substances such as a fluorescent, phosphorescent or luminescent material.

Preferably the optical device is a security device and advantageously is formed as a security thread, strip, foil, insert, label or patch.

The invention further provides an article provided with an optical device, preferably a security device, as described above. Preferably the article is selected from banknotes, cheques, passports, identity cards, certificates of authenticity, fiscal stamps and other documents for securing value or personal identity. In especially preferred embodiments, the article comprises a substrate with a transparent portion, on opposite sides of which the focusing element array and multicoloured image array respectively are provided. For example, the article could be a polymer banknote including a window or half-window region in which a security device of the sort described above is arranged, the focussing element array being arranged on one surface of the polymer substrate and the image array on the other. Alternatively the focussing element array and the image array could be located on opposite surfaces of a separate device article substrate (such as a foil, strip or thread substrate) and the while article affixed to a surface of the polymer document substrate in the window or half window region.

Examples of image arrays, optical devices and methods of manufacture will now be described and contrasted with conventional devices, with reference to the accompanying drawings, in which:
Figure 1 schematically depicts a comparative example of a conventional optical device: Figure 1(a) showing a schematic perspective view of the optical device; Figure 1(b) showing a cross-section through the optical device; and Figures 1(c) and (d) showing two exemplary images which may be displayed by the device at different viewing angles;
Figure 2 is a flow chart depicting steps of a method of manufacturing an image array in accordance with an embodiment of the invention;
Figures 3 and 4 schematically illustrate selected steps of the method of Figure 2 for two exemplary images;
Figure 5 shows an exemplary interlaced mask image produced in the method of Figure 2;
Figure 6 shows an exemplary colour layer used in the method of Figure 2;
Figure 7 shows an exemplary image array produced by overlapping the mask image of Figure 5 and the colour layer of Figure 7;
Figure 8 illustrates a portion of an exemplary look-up table as may be used in preferred implementations of the Figure 2 method;
Figures 9(a), (b) and (c) schematically depict three exemplary optical devices in accordance with embodiments of the invention in cross-section;
Figure 10 schematically illustrates a further embodiment of a optical device and shows five exemplary images it displays at different viewing angles;
Figures 11a and 11b show two alternative examples of arrays of elongate focussing structures which may be utilised in any embodiment of the optical devices disclosed herein, in plan view;
Figures 12, 13 and 14 show three exemplary articles carrying optical devices in accordance with embodiments of the present invention, a) in plan view and b) in cross-section; and
Figure 15 illustrates a further embodiment of an article carrying a optical device in accordance with embodiments of the present invention, a) in front view, b) in back view and c) in cross-section.

The ensuring description will focus in the main part on optical devices in the form of security devices. However it will be appreciated that the devices and methods disclosed herein could also be used, or adapted for use in other applications including those with purely decorative functions as mentioned above.

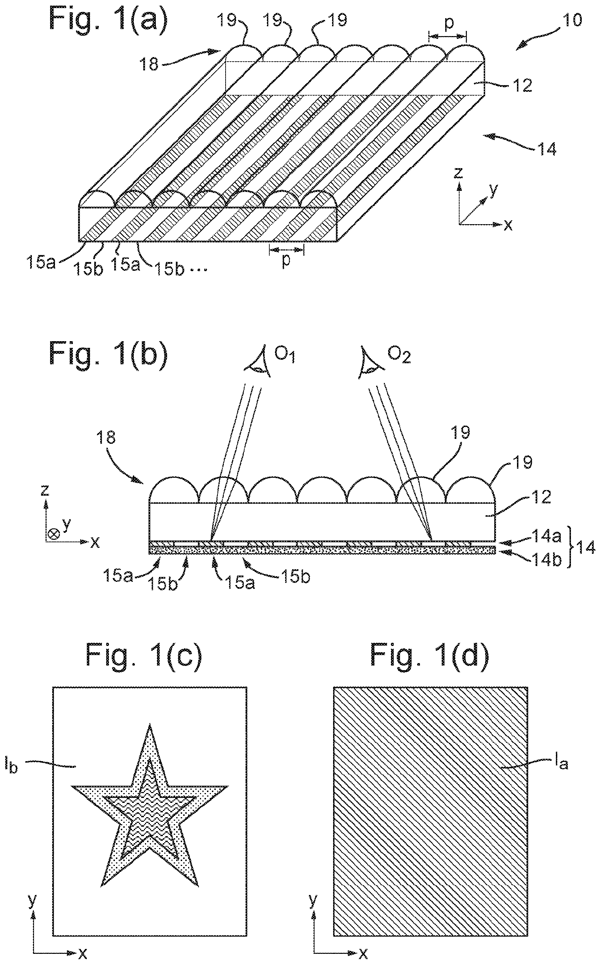

A comparative example of a lenticular device 10 is shown in Figure 1 in order to illustrate certain principles of operation. Figure 1(a) shows the device 10 in a perspective view and it will be seen that an array 18 of focussing element structures, here in the form of cylindrical lenses 19, is arranged on a transparent substrate 12. An image array 14 is provided on the opposite side of substrate 12 underlying (and overlapping with) the cylindrical lens array 18. Alternatively the image element array 14 could be located on the same surface of the substrate 12 as the lenses, directly under the lenses. Each cylindrical lens 19 has a corresponding optical footprint which is the area of the image element array 14 which can be viewed via the corresponding lens 19. In this example, the image array 12 is an interlaced image array comprising a series of image slices, of which two slices 15a, 15b are provided in (and fill) each optical footprint.

The image slices 15a each correspond to strips taken from a first image I_{A} whilst the image slices 15b each correspond to strips of a second image I_{B}. Thus, the size and shape of each first image slice 15a is substantially identical (being elongate and of width equal to half the optical footprint), but their information content will likely differ from one first image slice 15a to the next (unless the first image I_{A} is a uniform, solid colour block). The same applies to the second image slices 15b. The overall pattern of image slices is a line pattern, the elongate direction of the lines lying substantially parallel to the axial direction of the focussing elements 19, which here is along the y-axis and may be referred to below as the "first direction" of the device. For reference, the orthogonal direction (x-axis) may be referred to as the second direction of the device.

As shown best in the cross-section of Figure 1(b), the image element array 14 and the focussing element array have substantially the same periodicity as one another in the x-axis direction, such that one first image slice 15a and one second image slice 15b lies under each lens 19. The pitch P of the lens array 18 and of the image element array 14 is substantially equal and is constant across the whole device. In this example, the image array 14 is registered to the lens array 18 in the x-axis direction (i.e. in the arrays' direction of periodicity) such that a first pattern element P₁ lies under the left half of each lens and a second pattern element P₂ lies under the right half. However, registration between the lens array 18 and the image array in the periodic dimension is not essential.

When the device is viewed by a first observer O₁ from a first viewing angle, as shown in Figure 1(b) each lens 19 will direct light from the underlying first image slice 5a to the observer, with the result that the device as a whole appears to display the appearance of the first image I_{A}, which in this case is a uniform block colour as shown in in Figure 1(d). The full image I_{A} is reconstructed by the observer O₁ from the first image slices 15a directed to him by the lens array 18. When the device is tilted so that it is viewed by second observer O₂ from a second viewing angle, now each lens 19 directs light from the second image slices 15b to the observer. As such the whole device will now appear to display a second image I_{B}, which in this example is a multi-coloured image of a star, as shown in Figure 1(c), although it could comprise any alternative image. Hence, as the security device is tilted back and forth between the positions of observer O₁ and observer O₂, the appearance of the whole device switches between image I_{A} and image I_{B}.

In practice, in order to enable the second image I_{B} to be a multicolour image, in this comparative example the manufacturing technique places limitations on the nature of the first image I_{A} and/or on the number of images that can be interlaced. The image array 14 comprises a first layer 14a which defines the size, shape and position of all the image slices and typically comprises either a demetallised layer, a monochromatic printed working or an image of which portions have been removed using a release substance or similar, as described respectively in our International patent applications PCT/GB2016/051709 and PCT/GB2016/051708, leaving spaced image slices defining the first image. The second image is carried by second layer 14b which is arranged to overlap the first and fills in the gaps resulting in spaced image slices defining the second image. It will be appreciated that no more than two images can be interlaced using this technique and so the security device is limited to a maximum of two channels.

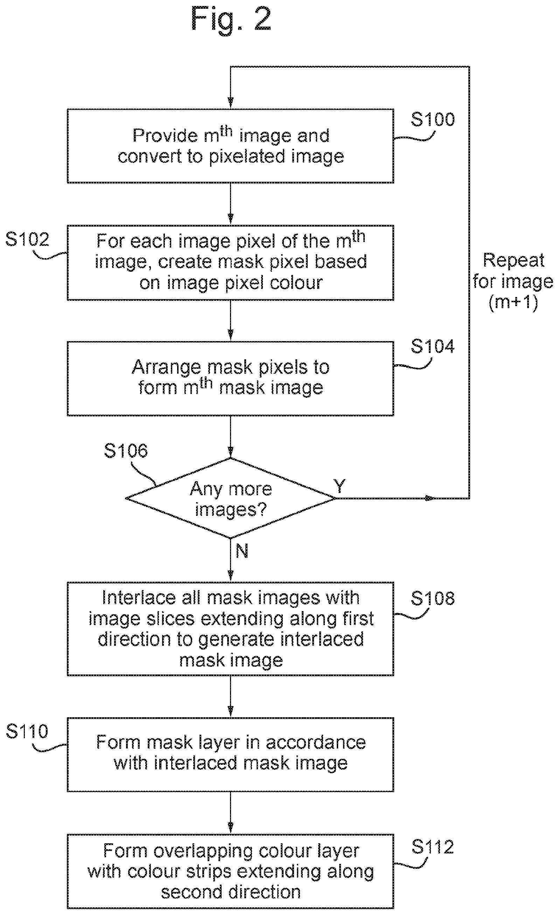

Exemplary methods of manufacturing an image array in accordance with embodiments of the invention will now be described with reference to Figures 2 to 7. As will be seen, the method imposes no limitation on the number of images that can be interlaced to form the image array, nor on whether each image is monochromatic or multi-coloured. There is also no limitation on which colour(s) are displayed by each respective image: these can be different or the same. Of course, to achieve a multi-coloured end device, at least two of the images will collectively need to include parts which are of at least two different colours (these may be in one and the same image, or in two different images).

The process begins in step S100 by obtaining a first image which is to be displaced by the end security device at one set of viewing angle and, if the image is not already in the form of a pixelated image with pixels of the desired size, it is converted accordingly. Thus the input image could be of any file type such as a bitmap, jpeg, gif or the like, and is preferably a multi-coloured image but this is not essential. For instance the image could be a monochromatic pattern or indicia, or could be a uniform, all-over colour block. The pixel size is selected so that, preferably, the individual pixels are not readily discernible to the naked eye whilst, desirably, keeping the overall number of pixels low so as to keep down the computational demands on the system. For instance, the original source image may be at a high resolution which is beyond that necessary to create a good visual effect in the final device and so step S100 may optionally involve reducing the resolution of the image, e.g. by combining groups of original pixels into single pixels of greater size and applying the average colour of the original pixels to that new pixel. In preferred cases, the pixelated image at the end of step S100 will have a pixel size between 50 and 500 microns, preferably between 100 and 300 microns. For instance, in a particularly preferred example a pixel size of 264 x 264 microns was adopted and found to produce good results.

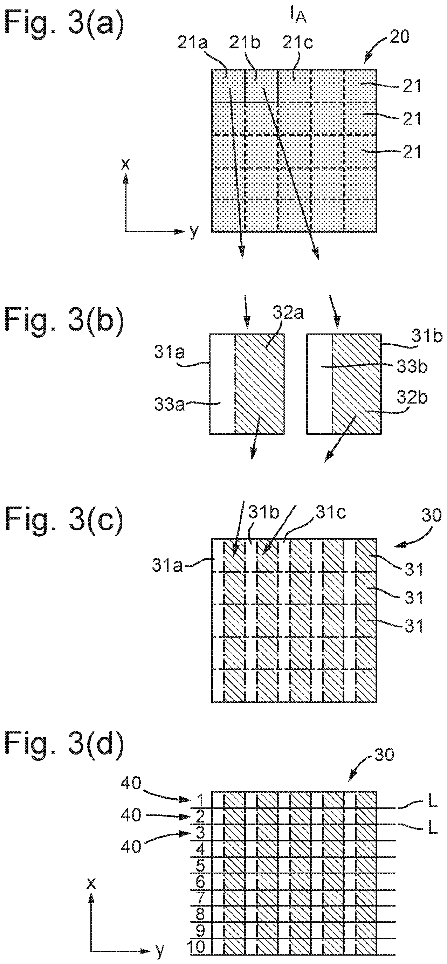

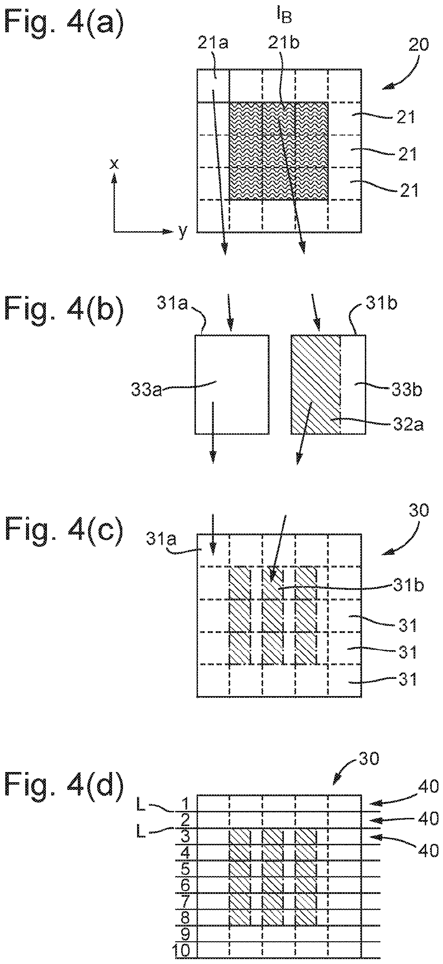

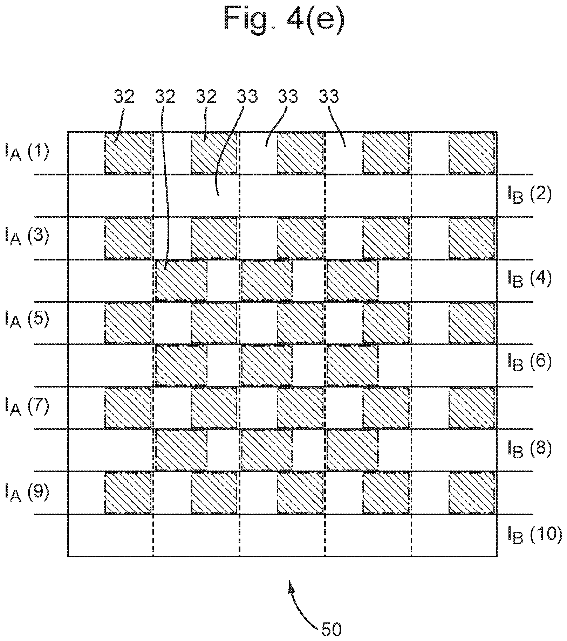

Figures 3(a) and 4(a) schematically depict two examples of such pixelated images 20 in a first implementation of the method. The image which is the subject of Figure 3 will be referred to as the first image I_{A} and the image which is the subject of Figure 4 as the second image I_{B}. In this example, the first image I_{A} is a uniform all-over block of a single colour, e.g. red, covering a rectangular area. The image 20 is made up of a plurality of image pixels 21, optionally generated via a conversion process as described above, each of which is the same size and shape as one another and exhibits a single colour (which for image I_{A} is the same colour for all its image pixels 21 but this will not typically be the case). Three exemplary ones of the image pixels are labelled 21a, 21b and 21c. The second image I_{B} on the other hand shows a single-colour square (e.g. blue) against a white background which fills in the rest of the rectangular area (which is the same shape and size as that of the first image I_{A}. Again, the image comprises a plurality of image pixels 21 of which exemplary pixels are labelled 21a and 21b.

The next steps are performed for each of the images independently. The two (or more) images may be processed sequentially as in this example, or in parallel if sufficient computing resources are available. In step S102, for each image pixel 21, a corresponding mask pixel 31 is created, based on the colour of that image pixel 21 in the image 20. Thus, Figure 3(b) shows two exemplary mask pixels 31a, 31b that are created from image pixels 21a, 21b of the first image I_{A} in this step. The mask pixels 31 each comprise mask region(s) 32 and/or void regions 33 depending on the colour to be exhibited. In this example, since image pixels 21a and 21b were both of the same colour in image 20 (e.g. red), the mask pixels 31a and 31b created for each of them will also be the same as one another (at least in terms of the proportion of mask and void regions, as discussed further below). Thus, each mask pixel 31a, 31b shown in Figure 3(b) comprises a mask region 32a, 32b which covers approximately two-thirds of the pixel area, and a void region 33a, 33b in the remaining third, which is located at the left-most edge of each pixel. Both the mask region 32a, 32b and the void region 33a, 33b extend in the x-axis direction from one side of the pixel to the other. As will become apparent below, the mask region(s) 32a, 32b represent colour component(s) which will ultimately be blocked from view whilst the void region(s) 33a, 33b represent those colour component(s) which will be displayed by the pixel in the finished device.

In the case of the second exemplary image I_{B} shown in Figure 4, the two exemplary image pixels 21a, 21b indicated are of different colours in the image 20: image pixel 21a is white whilst image pixel 21b is the colour of the central square area, e.g. blue. Hence in step S102, the corresponding mask pixels 31a, 31b created will be different from one another. In this example, mask pixel 31 a corresponding to image pixel 21a comprises solely a void region 33a which encompasses the whole of the pixel area. There is no mask region. Mask pixel 31b, on the other hand, comprises a mask region 32b occupying the left-most two thirds of the pixel area leaving a void region 33b in the right-most third.

Exemplary methods for generating the arrangements of mask and/or void region(s) for each mask pixel based on the colour of the corresponding image pixel in the original image will be explained below.

The so-generated mask pixels 31 are then arranged in accordance with the relative positions of the original image pixels 21 from which each derives, to form a mask image 30 corresponding to the original pixelated image 20 (step S104). Thus, Figure 3(c) schematically shows a mask image 30 based on first image I_{A} and Figure 4(c) schematically shows a mask image 30 based on second image I_{B}. In the case of first image I_{A}, since the original image 20 was a uniform block colour and all the image pixels 21 were of the same colour as one another, all of the mask pixels 31 are also the same as one another, exhibiting the same arrangement of one mask region 32 and one void region 33 as in the case of mask pixels 31a and 31b. Each mask pixel 31 is placed in the position of the original image pixel from which it was generated, resulting in the case of first image I_{A} in a mask image 30 having continuous lines of mask regions extending along the x-axis direction, spaced by lines of void regions as shown. In the case of the second image I_{B}, as shown in Figure 4(c), the outer mask pixels of the mask image 30, such as mask pixel 31a, will comprise only void regions, whilst the central mask pixels, such as mask pixel 31b, corresponding to the coloured square portion of image I_{B} will comprise lines of mask regions extending in the x-axis direction, spaced by lines of void regions. However, the lateral positions of the mask and void regions in the y-axis direction will be different in the mask image deriving from first image I_{A} as compared with that from second image I_{B}, due to the different colours in the original images (e.g. red vs. blue).

The above process for forming a mask image 30 from each original input image has been described here in parallel for the two exemplary images I_{A} and I_{B} but as mentioned already in practice it may be desirable to process each image sequentially. In this case, once step S104 is complete for the first image, the method involves checking whether there are any more images to be processed (step S106) and if so repeating the method (steps S100 to S104) for each input image. There is no limit as to the number of images that may be processed in this way.

Once a mask image 30 has been generated for each input image, the plurality of mask images 30 are digitally interlaced with one another in step S108. The process of interlacing two or more images is already known and any of the available techniques, e.g. existing software packages, can equally be applied to the mask images 30 generated by the presently disclosed technique, as to any other set of input images. The process is depicted schematically in Figures 3(d) and 4(d) which show each of the mask images 30 (corresponding to images I_{A} and I_{B} respectively) divided into image slices 40 along lines L lying parallel to the y-axis direction, which will correspond to the direction of the elongate axes of the focussing structures in the finished device (the "first direction"). In the examples depicted, each image is divided into ten image slices (labelled 1 to 10 in each case). The width of the image slices in the x direction will depend on the available optical footprint size in the finished device (which will depend on the size of the focussing elements) and on the number of images to be interlaced. In preferred examples, the width of each image slice 40 in the x-direction may be between 1 and 50 microns, preferably between 1 and 30 microns, more preferably between 1 and 20 microns, most preferably between 1 and 10 microns.

Selected image slices 40 from each mask image 30 are then interleaved with one another to form an interlaced mask image comprising slices from all the images to be displayed by the finished device over the full range of viewing angles. For a two-channel device, every second image slice 40 from each mask image 30 will be selected (e.g. slices 1, 3, 5, 7 and 9 from the image I_{A} mask, and slices 2, 4, 6, 8 and 10 from the image I_{B} mask), and the remainder discarded. The selected image slices from each mask image with then be arranged to alternate with one another in the x-axis direction to form the interlaced mask image 50, as shown schematically in Figure 4(e). Thus the interlaced mask image 50 contains image slices from both of the mask images 30, including the non-discarded portions of the mask regions 32 and void regions 33 in each. Hence image slices I_{A} (1), (3), (5), (7) and (9) are taken from the image mask 30 shown in Figure 3(d) and derive from image I_{A}, whilst image slices I_{B} (2), (4), (6), (8) and (10) are taken from the image mask 30 shown in Figure 4(d), and derive from image I_{B}.

It will be appreciated that, should it be desired to form a device with more than two channels, the process can readily be extended to interleave third and optionally subsequent mask images by dividing each mask image into an appropriate number of slices and selecting slices accordingly. For example, if three mask images were to be interleaved, each might be divided into 15 slices and every third slice selected from each image for interlacing, with the rest discarded. Any number of images can be interleaved in this way, the only limit being the resolution with which the interlaced mask image will ultimately be physically output as discussed below.

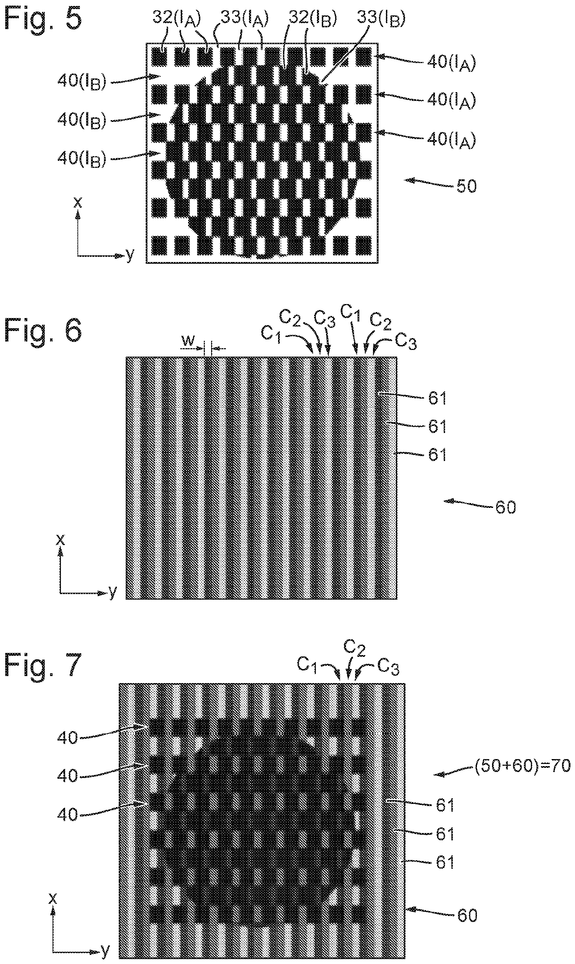

Figure 5 shows a further example of an interlaced mask image 50 which has been formed using the same method as described above but in which the second input image (I_{B}) was a blue circle against a white background, rather than a square. It will be noted that the pixel resolution is also higher in this example in order to preserve the circular shape. The first image I_{A} is on the other hand the same as in the previous example, i.e. a red rectangle. As before, the interlaced mask image comprises image strips 40(I_{A}) taken from the first image alternating with image strips 40(I_{B}) taken from the second image. Each strip contains an arrangement of mask portions 32 and void regions 33 in the same manner as previously described.

Figure 6 shows an exemplary colour layer 60 which can be combined with the interlaced mask image 50 of Figure 5 to complete the image array (the same form of colour layer 60 can also be utilised with the mask image of Figure 4(e)). The colour layer 60 comprises a regular array of elongate strips 61 of at least two different colours which alternate with one another periodically. The long axes of the colour strips are aligned with the x-axis, corresponding to the direction in which the image slices 40 are interleaved in the interlaced mask image 50. The image strips 61 do not need to be especially high resolution although are preferably sufficiently narrow that the human eye does not perceive the individual colours but rather sees a mixed colour formed by those colour strips which are visible at any one point, in combination. For instance, in preferred embodiments, each strip 61 may have a width w (in the y-axis direction) of between 20 and 200 microns, preferably between 50 and 150 microns, more preferably between 75 and 125 microns. It is not essential for each of the differently coloured strips to have the same width, but this is preferred.

A minimum of two different colour strips is necessary in order to achieve multiple colours, but in preferred embodiments the colour layer 60 will include strips of at least 3 different colours. In especially preferred embodiments, the colour layer 60 may include strips of three different colours (preferably red, green and blue) or four different colours (preferably cyan, magenta, yellow and black). In the example shown in Figure 6, the colour layer 60 consists of strips of three different colours C₁, C₂, C₃ such as blue, red and green respectively.

The interlaced mask image 50 and the colour layer 60 are each output in such a way so as to form respective physical layers which overlap one another, the result of which is a multi-coloured image array 70 as shown in Figure 7. In practice, the steps S110 of forming the (physical) mask layer and S112 of forming the (physical) colour layer 60 could be performed in either order or simultaneously. For example, the colour layer 60 may be a pre-existing printed layer on a suitable substrate (e.g. paper or polymer) and the mask layer could be formed directly thereon, e.g. by printing. Alternatively, in embodiments where the substrate is transparent, the mask layer could be formed on the substrate and then the colour layer placed over the top, again for instance by printing, in which case the described effects will be viewable in transmission. In still further examples, the mask layer could be formed on a first (transparent) substrate, and the colour layer on a second (transparent or non-transparent) substrate, and then the two overlapped by laminating the substrates together.

The mask layer 50 will be formed of a suitable masking material, arranged spatially in accordance with the interleaved mask image generated by the process described above. The mask layer 50 need only be monochromatic and hence a single type of masking material can be used to form all of the mask regions 33 across the whole layer, preferably leaving the void regions substantially free of masking material. The masking material could comprise for example an ink or other polymeric substance containing a visible pigment or the like, such as a black ink or a metallic ink, or in other implementations could comprise a metal or alloy, such as aluminium, copper or a mixture thereof.

The mask layer 50 can be formed by any suitable method which can achieve the high resolution required to define the image slices 40 and the arrangements of mask regions and void regions within each one. However since the layer is monochromatic, a number of suitable techniques are available. For instance, in some embodiments, the mask layer 50 will be formed by printing, e.g. by gravure printing, lithographic printing, flexographic printing or the like. As mentioned above, with careful control of the ink viscosity and other process parameters, with gravure or wet lithographic printing it is possible to achieve line widths down to about 15 microns. Alternatively the mask layer 50 could be formed using specialist high resolution printing techniques such as those disclosed in WO-A-2005052650, involving creating recesses in a substrate surface before spreading ink over the surface and then scraping off excess ink, achieving line widths of the order of 2 µm to 3 µm.

Another method of producing high-resolution image elements is disclosed in WO-A-2015/044671 and is based on flexographic printing techniques. A curable material is placed on raised portions of a die form only, and brought into contact with a support layer preferably over an extended distance. The material is cured either whilst the die form and support layer remain in contact and/or after separation. This process has been found to be capable of achieving high resolution and is therefore advantageous for use in forming the mask image 50 in the present application.

Some more particularly preferred methods for forming the mask layer 50 are known from US 2009/0297805 A1 and WO 2011/102800 A1. These disclose methods of forming micropatterns in which a die form or matrix is provided whose surface comprises a plurality of recesses. The recesses are filled with a curable material, a treated substrate layer is made to cover the recesses of the matrix, the material is cured to fix it to the treated surface of the substrate layer, and the material is removed from the recesses by separating the substrate layer from the matrix. Another strongly preferred method of forming the mask layer 50 is disclosed in WO 2014/070079 A1. Here it is taught that a matrix is provided whose surface comprises a plurality of recesses, the recesses are filled with a curable material, and a curable pickup layer is made to cover the recesses of the matrix. The curable pickup layer and the curable material are cured, fixing them together, and the pickup later is separated from the matrix, removing the material from the recesses. The pickup layer is, at some point during or after this process, transferred onto a substrate layer so that the pattern is provided on the substrate layer.

Alternatively the mask layer 50 could be formed by deposition a layer of a suitable material, such as metal, and then selectively removing the material from the void regions 33. Preferred techniques for producing a high-resolution pattern in a metal layer are disclosed in EP-A-0987599 and PCT/GB2016/051709. In each case, a photosensitive resist layer is applied over a metal layer on a substrate and then exposed to suitable radiation through a mask carrying the desired pattern. Depending on the type of resist used, the exposed resist becomes either more or less soluble in an etchant than the unexposed resist. The metallised substrate is then passed through an etchant bath which dissolves both the soluble portions of the resist and the underlying metal, leaving the desired pattern in the metal layer.

The colour layer 60, in contrast, need not be formed using a high-resolution technique and typically may be applied by printing via any suitable process, including both digital methods (such as inkjet, laser printing and the like) or non-digital methods (such as intaglio, gravure, lithographic, flexographic printing etc).

The mask layer 50 and colour layer 60 are overlapped as shown in Figure 7 such that their respective first and second directions substantially match. (Figure 7 shows the interlaced mask image of Figure 5 combined with the colour layer 60, but alternatively that of Figure 4(e) could be used). Hence, the interlaced image slices 40 of the mask layer 50 extend along the y-axis (first direction), whilst the colour strips 61 extend in the orthogonal, x-axis direction. The mask layer 50 and colour layer 60 are registered to one another in terms of skew (rotational orientation) to preserve this orthogonal arrangement, and may preferably also be translationally registered to one another along the y-axis direction, but this is not essential as will be explained below.

From inspection of Figure 7 it will be seen that in each image slice 40 deriving from the first image I_{A}, the mask regions of mask layer 50 obscure the strips 61 of colours C₁ and C₃ whilst the void regions reveal the strips of colour C₂. Thus, to the naked eye, the image slices 40 from image I_{A} will take on the colour C₂, which in this example is red. Meanwhile, each image slice 40 from the second image I_{B} comprises two regions: at the centre of the image the slices represent the coloured circle and here the mask image 50 includes mask regions which obscure the second and third colour strips C₂, C₃, and void regions which reveal the first colour C₁ which here is blue. Hence these portions will appear blue to the naked eye. Outside those portions, the image strips from image I_{B} consist solely of void regions and hence no colours are masked. As a result all three colours of the colour layer 60 are visible in equal proportion such that the naked eye perceives the region to be white.

When the so-formed image array 70 is then combined with a suitable focussing element array, such as an array of cylindrical focussing elements with their elongate axes extending in the same direction as the image slices 40 (i.e. in the y-axis direction), at a first set of viewing angles the image slices 40 from image I_{A} will be displayed such that the device as a whole exhibits the first image I_{A}, which here is a red rectangle. At a second set of viewing angles, the focussing elements will direct the image slices 40 from the second image I_{B} to the viewer, thereby reconstructing the second image I_{B}, i.e. a blue circle against a white background.

Whilst for the purposes of clarity the examples here have used two relatively simple images - one a monochromatic block colour and the other a two-colour indicia (a square or a circle) - it will be appreciated that the same principles can be extended to any type of input image including complex graphics such as photographs. Similarly, any number of images can be interleaved without any limitation on their colours.

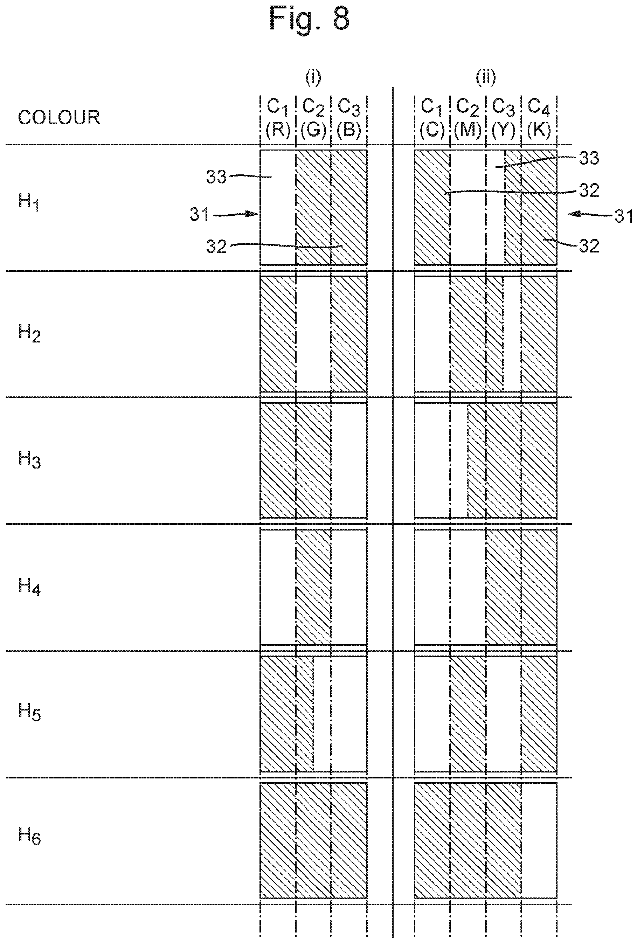

In step S102, the arrangement of mask and void regions for each mask pixel can be generated in various different ways. One preferred implementation is to use a look-up table which stores in memory a mask pixel arrangement for each of a set of available colours. Figure 8 schematically illustrates a portion of such a look-up table, which in this case provides mask pixel arrangements for six exemplary colours H₁ to H₆, for two different exemplary colour layers 60: (i) having red, green and blue colour strips; and (ii) having cyan, magenta, yellow and black colour strips. Each colour H₁ to H₆ may be defined in the memory by a range of colour values, e.g. in CIELab colour space or the like.

In this example, colour H₁ is red and so the stored mask pixel arrangement for colour layer (i) includes a mask region 32 which will obscure the green and blue strips whilst the red strip will be visible in void region 31. For colour layer (ii), to achieve the colour red, contributions from the magenta strip and the yellow strip are needed and so the mask arrangement includes two mask regions, one blocking the cyan strip and the other blocking the black strip (K) plus a portion of the yellow strip. The void region 33 reveals the magenta strip and the remaining portion of the yellow strip which are combined by human vision to form red.

Similarly, colour H₂ is green and now the he stored mask pixel arrangement for colour layer (i) includes two mask regions 32 which will obscure the red and blue strips whilst the green strip will be visible in void region 31. For colour layer (ii), to achieve the colour green, contributions from the cyan strip and the yellow strip are needed and so the mask arrangement includes two mask regions, one blocking the black strip and the other blocking the magenta strip plus a portion of the yellow strip. The two void regions 33 reveal the cyan strip and the remaining portion of the yellow strip which are combined by human vision to form green.

The same principles can be applied to form the rest of the table, where the exemplary colours depicted are: blue (H₃), purple (H₄), turquoise (H₅) and black (H₆).

The use of a look-up table such as that described above has the benefit that it is computationally efficient but the drawback that only a finite number of colours will be represented in the table. Whilst the colour value ranges associated with each of the colours can be arranged to encompass the full colour spectrum such that every input colour can be captured and a suitable mask generated, this may reduce the number of different colours in the final images displayed by the device as compared with the originals.

To avoid this, in an alternative implementation rather than use a look up table, step S102 may involve the use of an algorithm for generating a colour mask for each image pixel directly from the detected colour. For instance, the algorithm may involve determining the proportion of each of the available colour strips (e.g. red, green and blue) that are required to recreate the detected colour, and then selecting appropriate regions of the pixel area corresponding to the colour strips at with the necessary relative proportions. In this way there is no limitation on the number of colours but the process is more computationally expensive.

As mentioned above, translational registration of the mask layer 50 and the colour layer 60 is preferred but not essential. Registering the two layers in this way will ensure that the void regions of the mask layer reveal the intended strips of the colour layer 60, resulting in the intended colours being displayed. Without such registration, the void regions may reveal different ones of the colour strips. Nonetheless, the result will still be a version of the original image in the same number of different colours, although these will not be the same colours as in the original. For instance, the end result may appear as a negative version of the original. Such "false colour" images will be adequate in many implementations of the invention although are less preferred especially in cases where the information content of the original image gives rise to an expected colour.

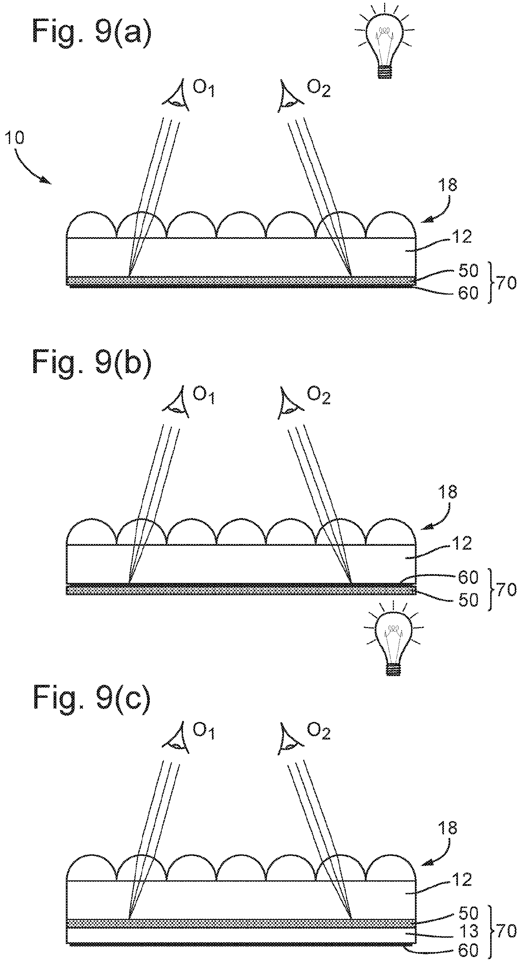

Figures 9(a), (b) and (c) show three exemplary constructions of security devices 10 in accordance with embodiments of the invention. In each case, a focussing element array 18 has been provided and overlapped with a multi-coloured image array 70 formed using the process described above. It should be appreciate that in practice the focussing element array 18 could be fabricated before or after formation of the image array 70. For example, the focussing element array 18 could be formed on a suitable transparent substrate 12 by a process such as cast-curing or printing, and then affixed to the image array 70 which has been formed on a second substrate. Alternatively, the image array 70 could be formed directly on the same substrate 12 as that on which the focussing elements 18 are formed. In these examples, the focussing elements are lenses but other arrangements in which the focussing elements are formed as mirrors are also contemplated.

The two layers forming the image array 70 could be arranged in either order with respect to the focussing element array. Thus, in the Figure 9(a) example, the mask layer 50 is located between the colour layer 60 and the focussing element array 18. This configuration is suitable for viewing in either reflected light or transmitted light in in both cases the mask regions of the mask layer 50 will block the unwanted portions of the colour layer 60 from view.

In the Figure 9(b) example, the order of the two layers is reversed such that the colour layer 60 is located between the focussing element array 18 and the mask layer 50. Depending on the construction of the mask layer this arrangement may require viewing in transmitted light where the mask regions of the mask layer 50 will act to block light as before. In reflected light the colour layer may remain visible on top of the mask regions (e.g. where these are formed of a reflective material such as metal) and so the image array 70 would not be effective. These different visual effects exhibited in transmitted and reflect light provide a useful additional security feature.

In the above examples, as is generally preferred, the mask layer 50 and colour layer 60 are directly in contact with another such that there is no parallax effect between the two layers upon tiling the device. However this is not essential and Figure 9(c) shows a further example where the mask layer 50 and colour layer 60 are spaced by a transparent substrate 13. The thickness of the substrate 13 may or may not be sufficient to introduce a noticeable parallax effect but if included this will cause the colour(s) of each individual image to change as the device is tilted, since different ones of the colour strips will be revealed by each void region of the mask layer 50.

In all cases, it is preferred that at least the mask layer lies substantially in the focal plane of the focussing element array 18 so as to achieve a substantially focussed image.

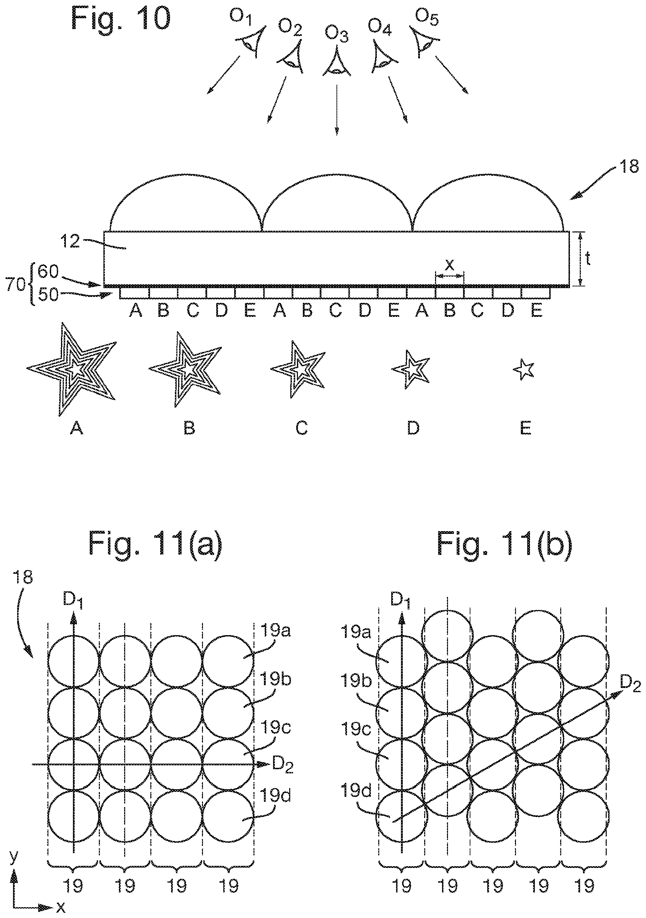

The various images interlaced in the device can take any desirable form. Particularly preferred implementations include selections of images which combine to give the appearance of animation upon tilting. For example, each of the interlaced images may comprise one frame of the animation and as they are viewed in sequence some quasi-continuous action will be displayed. Examples include movement of an icon or other graphic, expansion and/or contraction of an indicia, and morphing of one indicia into another. Figure 10 schematically depicts an example in which the mask layer 50 of the image array 70 (formed as described above) contains five interleaved images A to E, one slice from each image lying under each lens of array 18. In this example, all of the images A to E depict a star symbol but of different size: that of image A being the largest and that of image E the smallest. When the device is viewed by a first observer O₁, the lenses 18 will direct the slices of image A to the viewer, thereby displaying the large star symbol across the device area. As the viewing angle changes (observers O₂ to O₅), images B, C, D and E will be displayed in sequence causing the star symbol to appear to shrink in size. If the device is then tilted in the opposite direction the star will appear to expand once more. The images A to E could each be formed in different colours which would introduce a parallel colour shift effect. Alternatively, any one or more (or all) of the images A to E could itself be multi-coloured.

The devices shown in the previous embodiments have made use of an array 18 of one-dimensional elongate lenses 19 (e.g. cylindrical lenses). However, substantially the same effects can be achieved using a two-dimensional array of non-elongate lenses (e.g. spherical or aspherical lenses) arranged such that a straight line of such lenses takes the place of each individual elongate lens 19 previously described. The term "elongate focusing structure" is used to encompass both of these options. Hence, in all of the embodiments herein, it should be noted that the elongate lenses 19 described are preferred examples of elongate focussing structures and could be substituted by lines of non-elongate focussing elements. To illustrate this, Figures 11(a) and (b) depict two exemplary focussing element arrays which could be used in any of the presently disclosed embodiments and will achieve substantially the same visual effects already described.

Figure 11(a) shows an array of elongate focusing structures which comprises an orthogonal (square or rectangular) array of focusing elements, e.g. spherical lenses. Each column of lenses arranged along a straight line parallel to the y-axis is considered to constitute one elongate focusing structure 19 and dashed lines delimiting one elongate focusing structure 19 from the next have been inserted to aid visualisation of this. Hence for example the lenses 19a, 19b, 19c and 19d, the centre points of which are all aligned along a straight line, form one elongate focusing structure 19. These elongate focusing structures 19 are periodic along the orthogonal direction (x-axis) in the same way as previously described. The first direction can then be defined along the arrow D₁, which here is parallel to the y-axis, and the image slices (not shown) will be arranged with their long axes in that direction. The optical footprint of each elongate focusing structure 19 will still be substantially strip shaped but may not be precisely rectangular due to its dependence on the shape of the lenses themselves. As a result the sides of the optical footprint may not be straight but the centre line (defined as the line joining the points equidistant from the two sides of the footprint at each location) will straight and parallel to the first direction D₁.

Of course, since the grid of focusing elements is orthogonal, the first direction could be defined in the orthogonal direction D₂, in which case each row of lenses along the x-axis would be considered to make up the respective elongate focusing structures 19.

Figure 11(b) shows another array of elongate focusing structures which here comprises a hexagonal (or "close-packed") array of focusing elements such as spherical lenses. Again the columns of adjacent lenses such as 19a, 19b, 19c and 19d are taken to form the respective elongate focusing structures (aligned along the y-axis) and those structures are periodic along the orthogonal direction (x-axis). Hence the direction D₁ can be defined as the first direction with the image slices arranged with their long axes aligned in that direction. However it is also possible to define the direction D₂ (which here lies at 60 degrees from D₁) as the first direction. It should be noted that the x-axis direction is not suitable in this case for use as the first direction since the adjacent lenses do not all have their centre points on the same straight line in this direction.

Focussing element arrays such as these are particularly well suited to designs in which different parts of the device (or different adjacent devices in a security device assembly) are configured to operate upon tilting in different directions. This can be achieved for example by using direction D₁ as the first direction in a first part of the device (or in a first device) and using direction D₂ as the first direction in a second part of the device (or in a second device).

In order to achieve an acceptably low thickness of the security device (e.g. around 70 microns or less where the device is to be formed on a transparent document substrate, such as a polymer banknote, or around 40 microns or less where the device is to be formed on a thread, foil or patch), the pitch of the lenses must also be around the same order of magnitude (e.g. 70 microns or 40 microns). Therefore the width of the image slices 40 is preferably no more than half such dimensions, e.g. 35 microns or less.

As mentioned above, the thickness of the device 10 is directly related to the size of the focusing elements and so the optical geometry must be taken into account when selecting the thickness of the transparent layer 12. In preferred examples the device thickness is in the range 5 to 200 microns. "Thick" devices at the upper end of this range are suitable for incorporation into documents such as identification cards and drivers licences, as well as into labels and similar. For documents such as banknotes, thinner devices are desired as mentioned above. At the lower end of the range, the limit is set by diffraction effects that arise as the focusing element diameter reduces: e.g. lenses of less than 10 micron base width (hence focal length approximately 10 microns) and more especially less than 5 microns (focal length approximately 5 microns) will tend to suffer from such effects. Therefore the limiting thickness of such structures is believed to lie between about 5 and 10 microns.

Whilst in the above embodiments, the focusing elements have taken the form of lenses, in all cases these could be substituted by an array of focusing mirror elements. Suitable mirrors could be formed for example by applying a reflective layer such as a suitable metal to the cast-cured or embossed lens relief structure. In embodiments making use of mirrors, the image element array should be semi-transparent, e.g. having a sufficiently low fill factor to allow light to reach the mirrors and then reflect back through the gaps between the image elements. For example, the fill factor would need to be less than 1/√2 in order that that at least 50% of the incident light is reflected back to the observer on two passes through the image element array.

In all of the embodiments described above, the security level can be increased further by incorporating a magnetic material into the device. This can be achieved in various ways. For example an additional layer may be provided (e.g. under the image array 70) which may be formed of, or comprise, magnetic material. The whole layer could be magnetic or the magnetic material could be confined to certain areas, e.g. arranged in the form of a pattern or code, such as a barcode. The presence of the magnetic layer could be concealed from one or both sides, e.g. by providing one or more masking layer(s), which may be metal. If the focussing elements are provided by mirrors, a magnetic layer may be located under the mirrors rather than under the image array. Advantageously, the mask layer 50 could itself be formed of a magnetic material, e.g. a magnetic ink or metal.

Security devices of the sort described above can be incorporated into or applied to any article for which an authenticity check is desirable. In particular, such devices may be applied to or incorporated into documents of value such as banknotes, passports, driving licences, cheques, identification cards etc.

The security device or article can be arranged either wholly on the surface of the base substrate of the security document, as in the case of a stripe or patch, or can be visible only partly on the surface of the document substrate, e.g. in the form of a windowed security thread. Security threads are now present in many of the world's currencies as well as vouchers, passports, travellers' cheques and other documents. In many cases the thread is provided in a partially embedded or windowed fashion where the thread appears to weave in and out of the paper and is visible in windows in one or both surfaces of the base substrate. One method for producing paper with so-called windowed threads can be found in EP-A-0059056. EP-A-0860298 and WO-A-03095188 describe different approaches for the embedding of wider partially exposed threads into a paper substrate. Wide threads, typically having a width of 2 to 6mm, are particularly useful as the additional exposed thread surface area allows for better use of optically variable devices, such as that presently disclosed.

The security device or article may be subsequently incorporated into a paper or polymer base substrate so that it is viewable from both sides of the finished security substrate. Methods of incorporating security elements in such a manner are described in EP-A-1141480 and WO-A-03054297. In the method described in EP-A-1141480, one side of the security element is wholly exposed at one surface of the substrate in which it is partially embedded, and partially exposed in windows at the other surface of the substrate.

Base substrates suitable for making security substrates for security documents may be formed from any conventional materials, including paper and polymer. Techniques are known in the art for forming substantially transparent regions in each of these types of substrate. For example, WO-A-8300659 describes a polymer banknote formed from a transparent substrate comprising an opacifying coating on both sides of the substrate. The opacifying coating is omitted in localised regions on both sides of the substrate to form a transparent region. In this case the transparent substrate can be an integral part of the security device or a separate security device can be applied to the transparent substrate of the document. WO-A-0039391 describes a method of making a transparent region in a paper substrate. Other methods for forming transparent regions in paper substrates are described in EP-A-723501, EP-A-724519, WO-A-03054297 and EP-A-1398174.

The security device may also be applied to one side of a paper substrate so that portions are located in an aperture formed in the paper substrate. An example of a method of producing such an aperture can be found in WO-A-03054297. An alternative method of incorporating a security element which is visible in apertures in one side of a paper substrate and wholly exposed on the other side of the paper substrate can be found in WO-A-2000/39391.

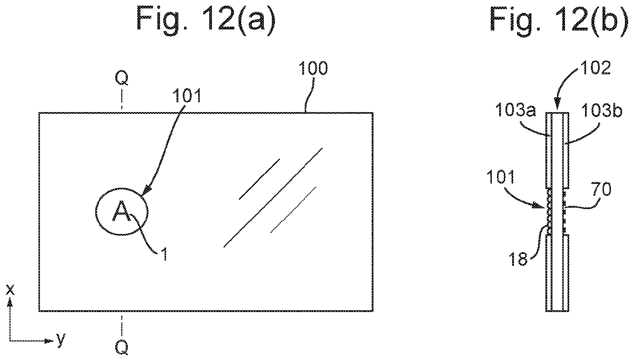

Examples of such documents of value and techniques for incorporating a security device will now be described with reference to Figures 12 to 15.

Figure 12 depicts an exemplary document of value 100, here in the form of a banknote. Figure 12a shows the banknote in plan view whilst Figure 12b shows the same banknote in cross-section along the line Q-Q'. In this case, the banknote is a polymer (or hybrid polymer/paper) banknote, having a transparent substrate 102. Two opacifying layers 103a and 103b are applied to either side of the transparent substrate 102, which may take the form of opacifying coatings such as white ink, or could be paper layers laminated to the substrate 102.

The opacifying layers 103a and 103b are omitted across an area 101 which forms a window within which the security device is located. As shown best in the cross-section of Figure 12b, an array of focusing elements 18 is provided on one side of the transparent substrate 102, and a corresponding image element array 70 is provided on the opposite surface of the substrate. The focusing element array 18 and image element array 70 are each as described above with respect to any of the disclosed embodiments, such that the device 1 displays a series of images in window 101 upon tilting the device (an image of the letter "A" is depicted here as an example). When the document is viewed from the side of lens array 18, the aforementioned lenticular effect can be viewed upon tilting the device. In this case, the first direction along which the focusing elements are aligned is parallel to the long edge of the document (y-axis). This results in the lenticular effect being activated as the document is tilted vertically (about the x axis). It should be noted that in modifications of this embodiment the window 101 could be a half-window with the opacifying layer 103b continuing across all or part of the window over the image element array 70. In this case, the window will not be transparent but may (or may not) still appear relatively translucent compared to its surroundings. The banknote may also comprise a series of windows or half-windows. In this case the different regions displayed by the security device could appear in different ones of the windows, at least at some viewing angles, and could move from one window to another upon tilting.

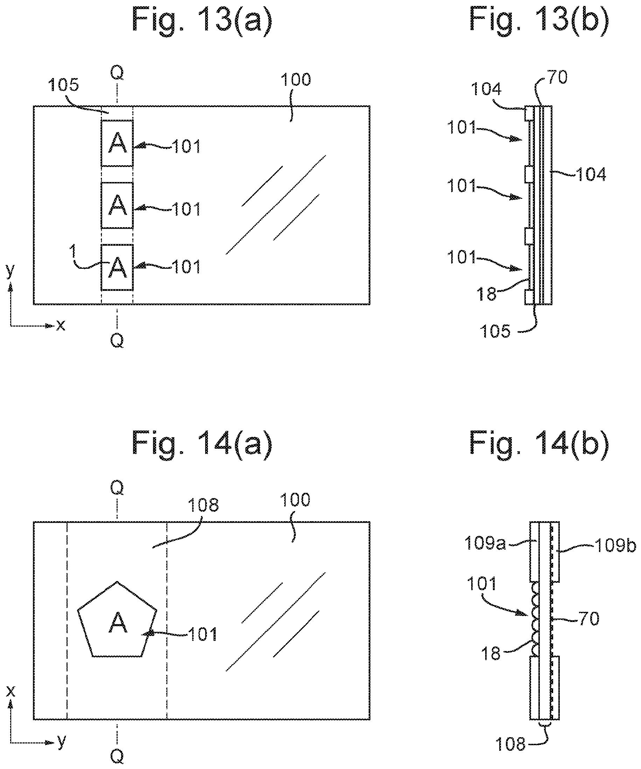

Figure 13 shows such an example, although here the banknote 100 is a conventional paper-based banknote provided with a security article 105 in the form of a security thread, which is inserted during paper-making such that it is partially embedded into the paper so that portions of the paper 104 lie on either side of the thread. This can be done using the techniques described in EP0059056 where paper is not formed in the window regions during the paper making process thus exposing the security thread in is incorporated between layers of the paper. The security thread 105 is exposed in window regions 101 of the banknote. Alternatively the window regions 101 which may for example be formed by abrading the surface of the paper in these regions after insertion of the thread. The security device is formed on the thread 105, which comprises a transparent substrate with lens array 18 provided on one side and image element array 70 provided on the other. In the illustration, the lens array 18 is depicted as being discontinuous between each exposed region of the thread, although in practice typically this will not be the case and the security device will be formed continuously along the thread. In this example, the first direction of the device is formed parallel to the short edge of the document 100 (y-axis) and hence the lenticular effect will be active on tilting about the short axis of the note.

If desired, several different security devices 1 could be arranged along the thread, with different or identical images displayed by each. In one example, a first window could contain a first device, and a second window could contain a second device, each having their focusing elements arranged along different (preferably orthogonal) directions, so that the two windows display different effects upon tilting in any one direction. For instance, the central window may be configured to exhibit a motion effect when the document 100 is tilted about the x axis whilst the devices in the top and bottom windows remain static, and vice versa when the document is tilted about the y axis.

In Figure 14, the banknote 100 is again a conventional paper-based banknote, provided with a strip element or insert 108. The strip 108 is based on a transparent substrate and is inserted between two plies of paper 109a and 109b. The security device is formed by a lens array 18 on one side of the strip substrate, and an image element array 70 on the other. The paper plies 109a and 109b are apertured across region 101 to reveal the security device, which in this case may be present across the whole of the strip 108 or could be localised within the aperture region 101. The focusing elements 18 are arranged with their long direction along the X axis which here is parallel to the long edge of the note. Hence the lenticular effect will appear to activate upon tilting the note about the X-axis.

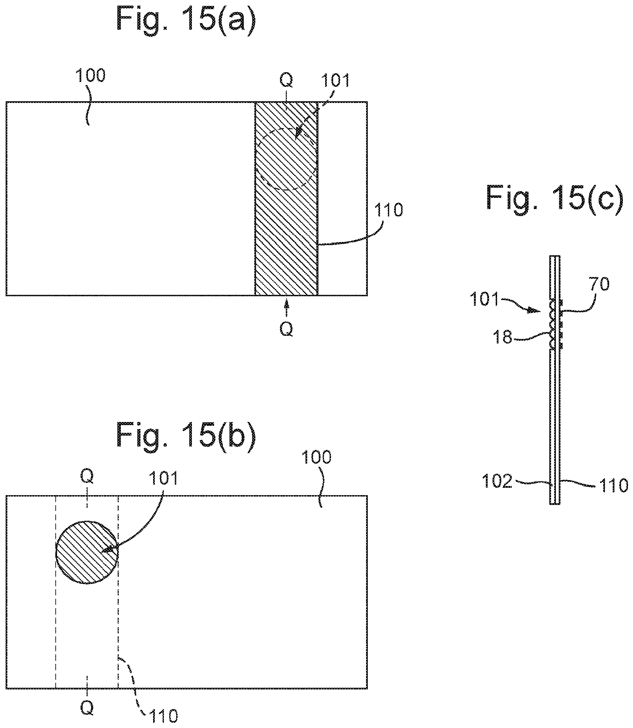

A further embodiment is shown in Figure 15 where Figures 15(a) and (b) show the front and rear sides of the document 100 respectively, and Figure 15(c) is a cross section along line Z-Z'. Security article 110 is a strip or band comprising a security device according to any of the embodiments described above. The security article 110 is formed into a security document 100 comprising a fibrous substrate 102, using a method described in EP-A-1141480. The strip is incorporated into the security document such that it is fully exposed on one side of the document (Figure 15(a)) and exposed in one or more windows 101 on the opposite side of the document (Figure 15(b)). Again, the security device is formed on the strip 110, which comprises a transparent substrate with a lens array 18 formed on one surface and image element array 70 formed on the other.

In Figure 15, the document of value 100 is again a conventional paper-based banknote and again includes a strip element 110. In this case there is a single ply of paper. Alternatively a similar construction can be achieved by providing paper 102 with an aperture 101 and adhering the strip element 110 on to one side of the paper 102 across the aperture 101. The aperture may be formed during papermaking or after papermaking for example by die-cutting or laser cutting. Again, the security device is formed on the strip 110, which comprises a transparent substrate with a lens array 18 formed on one surface and image element array 70 formed on the other.

In general, when applying a security article such as a strip or patch carrying the security device to a document, it is preferable to have the side of the device carrying the image element array bonded to the document substrate and not the lens side, since contact between lenses and an adhesive can render the lenses inoperative. However, the adhesive could be applied to the lens array as a pattern that the leaves an intended windowed zone of the lens array uncoated, with the strip or patch then being applied in register (in the machine direction of the substrate) so the uncoated lens region registers with the substrate hole or window It is also worth noting that since the device only exhibits the optical effect when viewed from one side, it is not especially advantageous to apply over a window region and indeed it could be applied over a non-windowed substrate. Similarly, in the context of a polymer substrate, the device is well-suited to arranging in half-window locations.

## Claims

1. A method of manufacturing an image array for an optical device, comprising:
(a) generating a plurality of different mask images (30) by, for each of at least two different images, the at least two images collectively including parts in at least two different colours:
(a1) providing a pixelated version of the image comprising a plurality of image pixels, each image pixel exhibiting a uniform colour;
(a2) for each image pixel of the pixelated image, creating a corresponding mask pixel based on the colour of the respective image pixel, each mask pixel comprising an arrangement of one or more mask regions and/or one or more void regions, different arrangements of the one or more mask regions and/or one or more void regions in different ones of the mask pixels defining different respective colours;
(a3) arranging the mask pixels in accordance with the positions of their corresponding image pixels in the pixelated image to form a mask image;
(b) interlacing the plurality of different mask images, by dividing each mask image into elongate image slices extending along a first direction, selecting a subset of image slices from each mask image, and arranging the selected image slices from all of the mask images to form an interlaced mask image in which the image slices from each respective mask image alternate with one another periodically along a second direction which is substantially orthogonal to the first direction;
then, in any order or simultaneously:
(c) forming a mask layer (50) comprising a masking material which is patterned in accordance with the interlaced mask image; and **characterised by**
(d) forming a colour layer (60) comprising elongate strips of at least two different colours which alternate with one another periodically in the first direction, the elongate strips extending along the second direction;
wherein the mask layer and the colour layer are arranged to overlap one another, whereby the void regions of the mask pixels in the mask layer reveal portions of the colour layer such that, in combination, the mask layer and the colour layer form a multi-coloured image array exhibiting versions of the at least two images interlaced with one another.

2. A method according to claim 1, wherein step (a1) comprises providing the image and converting it to the pixelated image by dividing the image into a grid of pixels of predetermined size and allocating each pixel a single colour based on the original colour(s) of the respective portion of the image.

3. A method according to any of the preceding claims, wherein in step (a2) each mask pixel is created by either:
identifying the colour of the respective image pixel and using a look-up table stored in memory to select an arrangement of one or more mask regions and/or one or more void regions corresponding to the identified colour; or
identifying the colour of the respective image pixel, identifying what relative proportions of the at least two colours of the colour layer are required to form the identified colour, and using an algorithm to generate an arrangement of one or more mask regions and/or one or more void regions which will reveal the identified relative proportions of the at least two colours of the colour layer.

4. A method according to any of the preceding claims, wherein in step (a2), the mask region(s) and/or void region(s) forming each mask pixel each extend in the second direction from one side of the mask pixel to the other, the width and position of the void region(s) in the first direction determining the colour that will be exhibited by the mask pixel combined with the colour layer.

5. A method according to any of the preceding claims, wherein in step (c) the mask layer formed is monochromatic.

6. A method according to any of the preceding claims, wherein in step (c), the mask layer is formed by either:
printing the masking material onto a surface in accordance with the interlaced mask image, preferably by gravure printing, lithographic printing, flexographic printing, micro-intaglio printing or dye diffusion thermal transfer (D2T2); or
depositing the masking material onto a surface and the selectively removing regions of the masking material in accordance with the interlaced mask image, the masking material preferably being a metal or metal alloy.

7. A method according to any of the preceding claims, wherein steps (c) and (d) are registered to one another at least in terms of skew and preferably also translational position along the first direction.

8. A method according to any of the preceding claims, wherein the optical device is a security device.

9. A method of manufacturing an optical device, comprising:
manufacturing a multi-coloured image array using the method of any of claims 1 to 8; and
overlapping the multi-coloured image array with a focussing element array comprising a plurality of elongate focusing structures, the elongate axes of which are aligned along the first direction, the elongate focusing structures being arranged parallel to one another periodically along the second direction, each elongate focusing structure having an optical footprint of which different elongate portions will be directed to the viewer in dependence on the viewing angle, the centre line of each optical footprint being parallel with the first direction;
wherein the multi-coloured image array and the focussing element array are configured such that at least one of the image slices from each of the different images is located in the optical footprint of each focussing element, whereby, depending on the viewing angle, the focusing element array directs light from selected image slices to the viewer, such that as the device is tilted about an axis parallel to the first direction, different ones of the respective images are sequentially displayed by the selected image slices in combination.

10. A method according to claim 9, wherein the focussing element array is registered to the mask layer of the multi-coloured image array at least in terms of skew and preferably also translational position along the second direction.

11. An optical device, comprising:
a focussing element array (18) comprising a plurality of elongate focusing structures, the elongate axes of which are aligned along a first direction, the elongate focusing structures being arranged parallel to one another periodically along a second direction which is substantially orthogonal to the first direction, each elongate focusing structure having an optical footprint of which different elongate portions will be directed to the viewer in dependence on the viewing angle, the centre line of each optical footprint being parallel with the first direction; and
a multi-coloured image array (14) overlapping the focussing element array, the multi-coloured image array comprising:
a mask layer (50) comprising a masking material which is patterned in accordance with an interlaced mask image, the interlaced mask image comprising elongate image slices from at least two different images, where the at least two different images collectively include parts in at least two different colours, the elongate image slices extending along the first direction and being interlaced with one another such that the elongate image slices from each respective image alternate with one another periodically along the second direction, each pixel of each image being represented by a corresponding mask pixel comprising an arrangement of one or more mask regions and/or one or more void regions, different arrangements of the one or more mask regions and/or one or more void regions in different ones of the mask pixels defining different respective colours; and **characterised by**
a colour layer (60) comprising elongate strips of at least two different colours which alternate with one another periodically in the first direction, the elongate strips extending along the second direction;
wherein the mask layer and the colour layer are arranged to overlap one another, whereby the void regions of the mask pixels in the mask layer reveal portions of the colour layer such that the multi-coloured image array formed by the mask layer and colour layer in combination exhibits versions of the at least two images interlaced with one another;
wherein the multi-coloured image array and the focussing element array are configured such that at least one of the image slices from each of the different images is located in the optical footprint of each focussing element, such that, depending on the viewing angle, the focusing element array directs light from selected image slices to the viewer, such that as the device is tilted about an axis parallel to the first direction, different ones of the respective images are sequentially displayed by the selected image slices in combination.

12. An optical device according to claim 11, wherein the mask region(s) and/or void region(s) forming each mask pixel each extend in the second direction from one side of the mask pixel to the other, the width and position of the void region(s) in the first direction determining the colour that will be exhibited by the mask pixel combined with the colour layer.

13. An optical device according to claim 11 or 12, wherein the mask layer is monochromatic.

14. An optical device according to any of claims 11 to 13, wherein the mask layer is either:
a printed mask layer formed by printing the masking material onto a surface in accordance with the interlaced mask image, preferably by gravure printing, lithographic printing, flexographic printing, micro-intaglio printing or dye diffusion thermal transfer (D2T2); or
a demetallised metal or metal alloy layer, preferably an etched metal or metal alloy layer.

15. An optical device according to any of claims 11 to 14, wherein the optical device is a security device, wherein preferably the security device is formed as a security thread, strip, foil, insert, label or patch.

16. An article provided with an optical device according to any of claims 11 to 15, wherein preferably the article is selected from banknotes, cheques, passports, identity cards, certificates of authenticity, fiscal stamps and other documents for securing value or personal identity.

17. An article according to claim 16, wherein the article comprises a substrate with a transparent portion, on opposite sides of which the focusing element array and multicoloured image array respectively are provided.

## Patentansprüche

1. Verfahren zum Herstellen einer Bildanordnung für eine optische Vorrichtung, umfassend:
(a) Erzeugen einer Vielzahl verschiedener Maskenbilder (30) furch Folgendes für jedes von mindestens zwei verschiedenen Bildern, wobei die mindestens zwei Bilder kollektiv Teile in mindestens zwei verschiedenen Farben umfassen:
(a1) Bereitstellen einer gepixelten Version des Bilds, die eine Vielzahl von Bildpixeln umfasst, wobei jedes Pixel eine einheitliche Farbe zeigt;
(a2) für jedes Pixel des gepixelten Bilds, Erzeugen eines entsprechenden Maskenpixels basierend auf der Farbe des jeweiligen Bildpixels, wobei jedes Maskenpixel eine Anordnung von einem oder mehreren Maskengebieten und/oder einem oder mehreren Leergebieten umfasst, wobei verschiedene Anordnungen des einen oder der mehreren Maskengebiete und/oder des einen oder der mehreren Leergebiete in verschiedenen der Maskenpixel verschiedene jeweilige Farben definieren;
(a3) Anordnen der Maskenpixel gemäß den Positionen ihrer entsprechenden Bildpixel in dem gepixelten Bild, um ein Maskenbild zu bilden;
(b) Verschachteln der Vielzahl verschiedener Maskenbilder durch Teilen jedes Maskenbilds in langgestreckte Bildscheiben, die sich entlang einer ersten Richtung erstrecken, Auswählen einer Teilmenge von Bildscheiben aus jedem Maskenbild und Anordnen der ausgewählten Bildscheiben aus allen Maskenbildern, um ein verschachteltes Maskenbild zu bilden, in dem sich die Bildscheiben von jedem jeweiligen Maskenbild entlang einer zweiten Richtung, die im Wesentlichen senkrecht zu der ersten Richtung ist, periodisch miteinander abwechseln;
dann, in beliebiger Reihenfolge oder gleichzeitig:
(c) Bilden einer Maskenschicht (50), umfassend ein Maskenmaterial, das gemäß dem verschachtelten Maskenbild strukturiert ist; und **gekennzeichnet durch**
(d) Bilden einer Farbschicht (60), umfassend langgestreckte Streifen mindestens zwei verschiedener Farben, die sich in der ersten Richtung periodisch miteinander abwechseln, wobei sich die langgestreckten Streifen entlang der zweiten Richtung erstrecken;
wobei die Maskenschicht und die Farbschicht angeordnet sind, um einander zu überlappen, wodurch die Leergebiete der Maskenpixel in der Maskenschicht Abschnitte der Farbschicht aufdecken, sodass die Maskenschicht und die Farbschicht in Kombination eine mehrfarbige Bildanordnung bilden, die Versionen der mindestens zwei Bilder zeigt, die miteinander verschachtelt sind.

2. Verfahren nach Anspruch 1, wobei Schritt (a1) Folgendes umfasst: Bereitstellen des Bilds und Umwandeln desselben in das gepixelte Bild durch Teilen des Bilds in ein Raster aus Pixeln vorgegebener Größe und Zuordnen einer einzigen Farbe zu jedem Pixel basierend auf der bzw. den ursprünglichen Farbe(n) des jeweiligen Abschnitts des Bilds.

3. Verfahren nach einem der vorangehenden Ansprüche, wobei in Schritt (a2) jedes Maskenpixel durch eines der Folgenden erzeugt wird:
Identifizieren der Farbe des jeweiligen Bildpixels und Verwenden einer in einem Speicher gespeicherten Nachschlagtabelle, um eine Anordnung von einem oder mehreren Maskengebieten und/oder einem oder mehreren Leergebieten, die der identifizierten Farbe entsprechen, auszuwählen; oder
Identifizieren der Farbe des jeweiligen Bildpixels, Identifizieren, welche relativen Anteile der mindestens zwei Farben der Farbschicht zum Bilden der identifizierten Farbe benötigt werden, und Verwenden eines Algorithmus zum Erzeugen einer Anordnung von einem oder mehreren Maskengebieten und/oder einem oder mehreren Leergebieten, die die identifizierten relativen Anteile der mindestens zwei Farben der Farbschicht aufdecken.

4. Verfahren nach einem der vorangehenden Ansprüche, wobei sich in Schritt (a2) das bzw. die Maskengebiet(e) und/oder Leergebiet(e), die jedes Maskenpixel bilden, jeweils in der zweiten Richtung von einer Seite des Maskenpixels zu der anderen erstrecken, wobei die Breite und die Position des Leergebiets bzw. der Leergebiete in der ersten Richtung die Farbe bestimmen, die von dem mit der Farbschicht kombinierten Maskenpixel gezeigt wird.

5. Verfahren nach einem der vorangehenden Ansprüche, wobei in Schritt (c) die gebildete Maskenschicht monochrom ist.

6. Verfahren nach einem der vorangehenden Ansprüche, wobei in Schritt (c) die Maskenschicht durch eines der Folgenden gebildet wird:
Drucken des Maskenmaterials auf eine Oberfläche gemäß dem verschachtelten Maskenbild, vorzugsweise durch Gravurdruck, Lithographiedruck, Flexodruck, Mikro-Rastertiefdruck oder Dye Diffusion Thermal Transfer (D2T2); oder
Abscheiden des Maskenmaterials auf eine Oberfläche und selektives Abtragen von Gebieten des Maskenmaterials gemäß dem verschachtelten Maskenbild, wobei es sich bei dem Maskenmaterial vorzugsweise um ein Metall oder eine Metalllegierung handelt.

7. Verfahren nach einem der vorangehenden Ansprüche, wobei Schritte (c) und (d) mindestens in Bezug auf Schrägstellung und vorzugsweise außerdem translatorischer Position entlang der ersten Richtung registerhaltig erfolgen.

8. Verfahren nach einem der vorangehenden Ansprüche, wobei es sich bei der optischen Vorrichtung um eine Sicherheitsvorrichtung handelt.

9. Verfahren zum Herstellen einer optischen Vorrichtung, das Folgendes umfasst:
Herstellen einer mehrfarbigen Bildanordnung unter Verwendung des Verfahrens nach einem der Ansprüche 1 bis 8; und
Überlappen der mehrfarbigen Bildanordnung mit einer Fokussierungselementanordnung, die eine Vielzahl von langgestreckten Fokussierungsgebilden umfasst, deren Längsachsen entlang der ersten Richtung ausgerichtet sind, wobei die langgestreckten Fokussierungsgebilde parallel zueinander entlang der zweiten Richtung periodisch angeordnet sind, wobei die langgestreckten Fokussierungsgebilde jeweils eine optisch aktive Fläche aufweisen, von der verschiedene langgestreckte Abschnitte in Abhängigkeit von dem Betrachtungswinkel auf den Betrachter gerichtet werden, wobei die Mittellinie jeder optisch aktiven Fläche zu der ersten Richtung parallel ist;
wobei die mehrfarbige Bildanordnung und die Fokussierungselementanordnung derart konfiguriert sind, dass mindestens eine der Bildscheiben von jedem der verschiedenen Bilder in der optisch aktiven Fläche jedes Fokussierungselements liegt, wodurch die Fokussierungselementanordnung abhängig von dem Betrachtungswinkel Licht von ausgewählten Bildscheiben auf den Betrachter richtet, sodass, wenn die Vorrichtung um eine zu der ersten Richtung parallele Achse gekippt wird, verschiedene der jeweiligen Bilder nacheinander von den ausgewählten Bildscheiben in Kombination angezeigt werden.

10. Verfahren nach Anspruch 9, wobei die Fokussierungselementanordnung mindestens in Bezug auf Schrägstellung und vorzugsweise außerdem translatorischer Position entlang der zweiten Richtung mit der Maskenschicht der mehrfarbigen Bildanordnung registerhaltig ist.

11. Optische Vorrichtung, die Folgendes umfasst:
eine Fokussierungselementanordnung (18), umfassend eine Vielzahl von langgestreckten Fokussierungselementen, deren Längsachsen entlang einer ersten Richtung ausgerichtet sind, wobei die langgestreckten Fokussierungsgebilde parallel zueinander entlang einer zweiten Richtung, die zu der ersten Richtung im Wesentlichen senkrecht ist, periodisch angeordnet sind, wobei die langgestreckten Fokussierungsgebilde jeweils eine optisch aktive Fläche aufweisen, von der verschiedene langgestreckte Abschnitte in Abhängigkeit von dem Betrachtungswinkel auf den Betrachter gerichtet werden, wobei die Mittellinie jeder optisch aktiven Fläche zu der ersten Richtung parallel ist; und
eine mehrfarbige Bildanordnung (14), die die Fokussierungselementanordnung überlappt, wobei die mehrfarbige Bildanordnung Folgendes umfasst:
eine Maskenschicht (50), umfassend ein Maskenmaterial, das gemäß einem verschachtelten Maskenbild strukturiert ist, wobei das verschachtelte Maskenbild langgestreckte Bildscheiben von mindestens zwei verschiedenen Bildern umfasst, wobei die mindestens zwei verschiedenen Bilder kollektiv Teile in mindestens zwei verschiedenen Farben umfassen, wobei sich die langgestreckten Bildscheiben entlang der ersten Richtung erstrecken und derart miteinander verschachtelt sind, dass sich die langgestreckten Bildscheiben von jedem jeweiligen Bild entlang der zweiten Richtung periodisch miteinander abwechseln, wobei jedes Pixel jedes Bilds von einem entsprechenden Maskenpixel repräsentiert wird, das eine Anordnung von einem oder mehreren Maskengebieten und/oder einem oder mehreren Leergebieten umfasst, wobei verschiedene Anordnungen des einen oder der mehreren Maskengebiete und/oder des einen oder der mehreren Leergebiete in verschiedenen der Maskenpixel verschiedene jeweilige Farben definieren; und **gekennzeichnet durch**
eine Farbschicht (60), umfassend langgestreckte Streifen mindestens zwei verschiedener Farben, die sich in der ersten Richtung periodisch miteinander abwechseln, wobei sich die langgestreckten Streifen entlang der zweiten Richtung erstrecken;
wobei die Maskenschicht und die Farbschicht angeordnet sind, um einander zu überlappen, wodurch die Leergebiete der Maskenpixel in der Maskenschicht Abschnitte der Farbschicht aufdecken, sodass die von der Maskenschicht und der Farbschicht in Kombination gebildete mehrfarbige Bildanordnung Versionen der mindestens zwei Bilder zeigt, die miteinander verschachtelt sind;
wobei die mehrfarbige Bildanordnung und die Fokussierungselementanordnung derart konfiguriert sind, dass mindestens eine der Bildscheiben von jedem der verschiedenen Bilder in der optisch aktiven Fläche jedes Fokussierungselements liegt, sodass die Fokussierungselementanordnung abhängig von dem Betrachtungswinkel Licht von ausgewählten Bildscheiben auf den Betrachter richtet, sodass, wenn die Vorrichtung um eine zu der ersten Richtung parallele Achse gekippt wird, verschiedene der jeweiligen Bilder nacheinander von den ausgewählten Bildscheiben in Kombination angezeigt werden.

12. Optische Vorrichtung nach Anspruch 11, wobei das bzw. die Maskengebiet(e) und/oder Leergebiet(e), die jedes Maskenpixel bilden, sich jeweils in der zweiten Richtung von einer Seite des Maskenpixels zu der anderen erstrecken, wobei die Breite und die Position des Leergebiets bzw. der Leergebiete in der ersten Richtung die Farbe bestimmen, die von dem mit der Farbschicht kombinierten Maskenpixel gezeigt wird.

13. Optische Vorrichtung nach Anspruch 11 oder 12, wobei die Maskenschicht monochrom ist.

14. Optische Vorrichtung nach Anspruch 11 oder 13, wobei es sich bei der Maskenschicht um eine der Folgenden handelt:
eine gedruckte Maskenschicht, die durch Drucken des Maskenmaterials auf eine Oberfläche gemäß dem verschachtelten Maskenbild gebildet wird, vorzugsweise durch Gravurdruck, Lithographiedruck, Flexodruck, Mikro-Rastertiefdruck oder Dye Diffusion Thermal Transfer (D2T2); oder
eine entmetallisierte Metall- oder Metalllegierungsschicht, vorzugsweise eine geätzte Metall- oder Metalllegierungsschicht.

15. Optische Vorrichtung nach einem der Ansprüche 11 bis 14, wobei es sich bei der optischen Vorrichtung um eine Sicherheitsvorrichtung handelt, wobei die Sicherheitsvorrichtung vorzugweise als Sicherheitsfaden, -streifen, -folie, -etikett oder -patch gebildet ist.

16. Artikel, der mit einer Sicherheitsvorrichtung nach einem der Ansprüche 11 bis 15 versehen ist, wobei der Artikel vorzugsweise aus Banknoten, Schecks, Reisepässen, Identitätskarten, Echtheitszertifikaten, Finanzmarken und anderen Dokumenten zum Sichern von Wert oder persönlicher Identität ausgewählt ist.

17. Artikel nach Anspruch 16, wobei der Artikel ein Substrat mit einem transparenten Abschnitt umfasst, auf dessen gegenüberliegenden Seiten jeweils die Fokussierungselementanordnung bzw. die mehrfarbige Bildanordnung bereitgestellt sind.

## Revendications

1. Procédé de fabrication d'un réseau d'images pour un dispositif optique, comprenant :
(a) la génération d'une pluralité d'images de masque différentes (30) par, pour chacune des au moins deux images différentes, les au moins deux images comprenant collectivement des parties dans au moins deux couleurs différentes ;
(a1) la fourniture d'une version pixelisée de l'image comprenant une pluralité de pixels d'image, chaque pixel d'image présentant une couleur uniforme ;
(a2) pour chaque pixel d'image de l'image pixélisée, la création d'un pixel de masque correspondant en se basant sur la couleur du pixel d'image respectif, chaque pixel de masque comprenant un agencement d'une ou de plusieurs régions de masque et/ou d'une ou de plusieurs régions de vide, différents agencements de la ou des régions de masque et/ou de la ou des régions de vide dans différents pixels des pixels de masque définissant différentes couleurs respectives ;
(a3) l'agencement des pixels de masque selon les positions de leurs pixels d'image correspondants dans l'I'image pixélisée afin de former une image de masque ;
(b) l'entrelacement de la pluralité d'images de masque différentes, en divisant chaque image de masque en des tranches d'image allongées s'étendant le long d'une première direction, la sélection d'un sous-ensemble de tranches d'image venant de chaque image de masque, et l'agencement des tranches d'image sélectionnées venant de toutes les images de masque afin de former une image de masque entrelacée dans laquelle les tranches d'image venant de chaque image de masque respective alternent l'une avec l'autre périodiquement le long d'une deuxième direction qui est essentiellement orthogonale à la première direction ;
puis, dans n'importe quel ordre ou simultanément :
(c) la formation d'une couche de masque (50) comprenant une matière de masquage qui est structurée conformément à l'image de masque entrelacée ; et **caractérisé par**
(d) la formation d'une couche de couleur (60) comprenant des bandes allongées d'au moins deux couleurs différentes qui alternent l'une avec l'autre périodiquement dans la première direction, ces bandes allongées s'étendant le long de la deuxième direction ;
la couche de masque et la couche de couleur se chevauchant l'une l'autre, comme quoi les régions de vide des pixels de masque dans la couche de masque révèlent des parties de la couche de couleur de manière à ce que, lorsqu'elles sont combinées, la couche de masque et la couche de couleur forment un réseau d'images multicolore présentant des versions des aux moins deux images entrelacées l'une avec l'autre.

2. Procédé selon la revendication 1, dans lequel l'étape (a1) comprend la fourniture de l'image et sa conversion en l'image pixélisée en divisant l'image en une grille de pixels d'une taille prédéterminée et en attribuant à chaque pixel une seule couleur en se basant sur la ou les couleurs d'origine de la partie respective de l'image.

3. Procédé selon l'une quelconque des revendications précédentes, dans lequel, lors de l'étape (a2), chaque pixel de masque est créé :
soit en identifiant la couleur du pixel d'image respectif et en utilisant une table de consultation stockée dans une mémoire afin de sélectionner un agencement d'une ou de plusieurs régions de masque et/ou d'une ou de plusieurs régions de vide correspondant à la couleur identifiée ;
soit en identifiant la couleur du pixel d'image respectif, en identifiant quelles proportions relatives des au moins deux couleurs de la couche de couleur sont nécessaires pour former la couleur identifiée, et en utilisant un algorithme pour générer un agencement d'une ou de plusieurs régions de masque et d'une ou de plusieurs régions de vide qui révèleront les proportions relatives identifiées des au moins deux couleurs de la couche de couleur.

4. Procédé selon l'une quelconque des revendications précédentes, dans lequel, lors de l'étape (a2), la ou les régions de masque et/ou la ou les régions de vide formant chaque pixel de masque s'étendent chacune dans la deuxième direction depuis un côté du pixel de masque jusqu'à l'autre, la largeur et la position de la ou des régions de vide dans la première direction déterminant la couleur qui sera présentée par le pixel de masque combiné avec la couche de couleur.

5. Procédé selon l'une quelconque des revendications précédentes, dans lequel, lors de l'étape (c), la couche de masque formée est monochromatique.

6. Procédé selon l'une quelconque des revendications précédentes, dans lequel, lors de l'étape (c), la couche de masque est formée :
soit en imprimant la matière de masquage sur une surface conformément à l'image de masque entrelacée, de préférence par impression hélio, par impression lithographique, par impression flexographique, par micro-impression en creux ou par transfert thermique avec diffusion de colorant (D2T2) ;
soit en déposant la matière de masquage sur une surface puis en enlevant sélectivement des régions de matière de masquage conformément à l'image de masque entrelacée, la matière de masquage étant de préférence un métal ou un alliage métallique.

7. Procédé selon l'une quelconque des revendications précédentes, dans lequel les étapes (c) et (d) sont en repérage l'une par rapport à l'autre au moins en termes d'obliquité et aussi, de préférence, en termes de position de translation le long de la première direction.

8. Procédé selon l'une quelconque des revendications précédentes, dans lequel le dispositif optique est un dispositif de sécurité.

9. Procédé de fabrication d'un dispositif optique, comprenant :
la fabrication d'un réseau d'images multicolore en utilisant le procédé selon l'une quelconque des revendications 1 à 8 ; et
le chevauchement de ce réseau d'images multicolore avec un réseau d'éléments de focalisation comprenant une pluralité de structures de focalisation allongées, dont les axes allongés sont alignés le long de la première direction, ces structures de focalisation allongées étant disposées parallèlement l'une à l'autre périodiquement le long de la deuxième direction, chaque structure de focalisation allongée ayant une empreinte optique dont différentes parties allongées seront dirigées vers l'observateur selon l'angle de vision, la ligne centrale de chaque empreinte optique étant parallèle à la première direction ;
le réseau d'images multicolore et le réseau d'éléments de focalisation étant configurés de manière à ce qu'au moins une des tranches d'image venant de chacune des différentes images soit située dans l'empreinte optique de chaque élément de focalisation, comme quoi, en fonction de l'angle de vision, le réseau d'éléments de focalisation dirige la lumière venant de tranches d'image sélectionnées vers l'observateur, de manière à ce que, tandis que le dispositif est incliné autour d'un axe parallèle à la première direction, des images différentes des images respectives sont affichées séquentiellement de manière combinée par les tranches d'image sélectionnées.

10. Procédé selon la revendication 9, dans lequel le réseau d'éléments de focalisation est en repérage par rapport à la couche de masque du réseau d'images multicolore au moins en termes d'obliquité et aussi, de préférence, en termes de position de translation le long de la deuxième direction.

11. Dispositif optique comprenant :
un réseau d'éléments de focalisation (18) comprenant une pluralité de structures de focalisation allongées, dont les axes allongés sont alignés le long d'une première direction, ces structures de focalisation allongées étant disposées parallèlement l'une à l'autre périodiquement le long d'une deuxième direction qui est essentiellement orthogonale à la première direction, chaque structure de focalisation allongée ayant une empreinte optique dont différentes parties allongées seront dirigées vers l'observateur selon l'angle de vision, la ligne centrale de chaque empreinte optique étant parallèle à la première direction ; et
un réseau d'images multicolore (14) chevauchant le réseau d'éléments de focalisation, ce réseau d'images multicolore comprenant :
une couche de masque (50) comprenant une matière de masquage qui est structurée conformément à une image de masque entrelacée, cet image de masque entrelacée comprenant des tranches d'image allongées venant d'au moins deux images différentes, ces au moins deux images différentes comprenant collectivement des parties dans au moins deux couleurs différentes, ces tranches d'image allongées s'étendant le long de la première direction et étant entrelacées l'une avec l'autre de manière à ce que les tranches d'image allongées venant de chaque image respective alternent l'une avec l'autre périodiquement le long de la deuxième direction, chaque pixel de chaque image étant représenté par un pixel de masque correspondant comprenant un agencement d'une ou de plusieurs régions de masque et d'une ou de plusieurs régions de vide, différents agencements de la ou des régions de masque et/ou de la ou des régions de vide dans différents pixels des pixels de masque définissant différentes couleurs respectives, et **caractérisé par**
une couche de couleur (60) comprenant des bandes allongées d'au moins deux couleurs différentes qui alternent l'une avec l'autre périodiquement dans la première direction, ces bandes allongées s'étendant le long de la deuxième direction ;
la couche de masque et la couche de couleur étant disposées de manière à se chevaucher l'une l'autre, comme quoi les régions de vide des pixels de masque dans la couche de masque révèlent des parties de la couche de couleur de manière à ce que le réseau d'images multicolore formé par la couche de masque et la couche de couleur combinées présente des versions des aux moins deux images entrelacées l'une avec l'autre ;
le réseau d'images multicolore et le réseau d'éléments de focalisation étant configurés de manière à ce qu'au moins une des tranches d'image venant de chacune des différentes images soit située dans l'empreinte optique de chaque élément de focalisation de manière à ce que, en fonction de l'angle de vision, le réseau d'éléments de focalisation dirige la lumière venant de tranches d'image sélectionnées vers l'observateur, de manière à ce que, tandis que le dispositif est incliné autour d'un axe parallèle à la première direction, différentes images des images respectives sont affichées séquentiellement de manière combinée par les tranches d'image sélectionnées.

12. Dispositif optique selon la revendication 11, dans lequel la ou les régions de masque et/ou la ou les régions de vide formant chaque pixel de masque s'étendent chacune dans la deuxième direction depuis un côté du pixel de masque jusqu'à l'autre, la largeur et la position de la ou des régions de vide dans la première direction déterminant la couleur qui sera présentée par le pixel de masque combiné avec la couche de couleur.

13. Dispositif optique selon la revendication 11 ou 12, dans lequel la couche de masque est monochromatique.

14. Dispositif optique selon la revendication 11 à 13, dans lequel la couche de masque est :
soit une couche de masque imprimée formée en imprimant la matière de masquage sur une surface conformément à l'image de masque entrelacée, de préférence par impression hélio, par impression lithographique, par impression flexographique, par micro-impression en creux ou par transfert thermique avec diffusion de colorant (D2T2) ;
soit une couche de métal ou d'alliage de métal démétallisée, de préférence une couche de métal ou d'alliage de métal gravée à l'acide.

15. Dispositif optique selon l'une quelconque des revendications 11 à 14, ce dispositif optique étant un dispositif de sécurité, ce dispositif de sécurité étant formé comme fil de sécurité, bande de sécurité, feuille de sécurité, encart de sécurité, étiquette de sécurité ou becquet de sécurité.

16. Article fourni avec un dispositif optique selon l'une quelconque des revendications 11 à 15, cet article étant sélectionné de préférence parmi des billets de banque, des chèques, de passeports, des cartes d'identité, des certificats d'authenticité, des timbres fiscaux et d'autres documents pour sécuriser une valeur ou une identité personnelle.

17. Article selon la revendication 16, cet article comportant un substrat avec une partie transparente, sur les côtés opposés duquel le réseau d'éléments de focalisation et le réseau d'images multicolore sont fournis respectivement.
